(19) Europäisches Patentamt / European Patent Office / Office européen des brevets

(11) **EP 4 700 521 A2**

(12) **EUROPEAN PATENT APPLICATION**

(43) Date of publication:
25.02.2026 Bulletin 2026/09

(21) Application number: 26151136.4

(22) Date of filing: 22.06.2023

(51) International Patent Classification (IPC):
*G05D 1/00* (2024.01)

(52) Cooperative Patent Classification (CPC):
G05D 1/0257

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR

(30) Priority: 29.06.2022 US 202263356813 P
05.08.2022 US 202263370628 P

(62) Document number(s) of the earlier application(s) in accordance with Art. 76 EPC:
23180880.9 / 4 300 247

(71) Applicant: Techtronic Cordless GP
Anderson, SC 29621 (US)

(72) Inventor: CHOI, Man Ho
Kwai Chung Hong Kong SAR (CN)

(74) Representative: Zimmermann & Partner
Patentanwälte mbB
P.O. Box 330 920
80069 München (DE)

Remarks:
This application was filed on 09.01.2026 as a divisional application to the application mentioned under INID code 62.

(54) **CONTROLLING MOVEMENT OF A ROBOTIC GARDEN TOOL WITH RESPECT TO ONE OR MORE DETECTED OBJECTS**

(57) A robotic garden tool may include an object detection sensor. Object detection data from the object detection sensor may indicate a respective position of each of one or more objects with respect to the robotic garden tool. The robotic garden tool may be configured to execute a speed control algorithm that may include determining, based on the object detection data, whether any objects are present within a detection area of the object detection sensor. The speed control algorithm also may include adjusting a speed of the robotic garden tool and/or a travel direction of the robotic garden tool based on whether and where any objects are detected within the detection area.

EP 4 700 521 A2

EP 4 700 521 A2

**Description**

RELATED APPLICATIONS

This application claims priority to U.S. Provisional Application No. 63/370,628, filed on August 5, 2022 (Attorney Docket No.: 206737-9054-US02) and to U.S. Provisional Application No. 63/356,813, filed on June 29, 2022 (Attorney Docket No.: 206737-9062-US01), the entire contents of each of which are hereby incorporated by reference.

FIELD

The present disclosure relates to robotic tools, particularly to methods and systems for controlling a speed and/or movement direction of a robotic tool in response to detecting one or more objects. The present disclosure also relates to a millimeter wave radar sensor mounted on the robotic tool to detect the one or more objects.

SUMMARY

One embodiment includes a robotic garden tool that may include a housing, and a set of wheels coupled to the housing and configured to rotate to propel the robotic garden tool on an operating surface. The robotic garden tool may also include at least one wheel motor coupled to one or more wheels of the set of wheels. The at least one wheel motor may be configured to drive rotation of the one or more wheels. The robotic garden tool may also include an object detection sensor configured to detect one or more objects. The robotic garden tool may also include an electronic processor in communication with the object detection sensor and configured to control the at least one wheel motor to move the robotic garden tool on the operating surface by receiving object detection data from the object detection sensor. The object detection data may indicate a respective position of each of the one or more objects with respect to the robotic garden tool. The electronic processor may also be configured to execute a speed control algorithm that may include determining, based on the object detection data, whether any objects are present within a detection area of the object detection sensor. The speed control algorithm executed by the electronic processor also may include in response to determining that the object detection data indicates an absence of any objects within the detection area, controlling the at least one wheel motor to move the robotic garden tool forward at a first speed. The speed control algorithm executed by the electronic processor also may include in response to determining that the object detection data indicates that at least one object is present within the detection area, determining a closest distance of a closest object to the robotic garden tool based on the object detection data. The speed control algorithm executed by the electronic processor also may include determining whether the closest distance between the closest object and the robotic garden tool is greater than or equal to a first distance threshold. The speed control algorithm executed by the electronic processor also may include in response to determining that the closest distance is greater than or equal to the first distance threshold, controlling the at least one wheel motor to move the robotic garden tool forward at the first speed. The speed control algorithm executed by the electronic processor also may include in response to determining that the closest distance is less than the first distance threshold, determining whether the closest distance is greater than or equal to a second distance threshold that is lower than the first distance threshold. The speed control algorithm executed by the electronic processor also may include in response to determining that the closest distance is less than the first distance threshold and greater than or equal to the second distance threshold, controlling the at least one wheel motor to move the robotic garden tool forward at a second speed proportionate to the closest distance between the robotic garden tool and the closest object. The second speed may be less than the first speed. The speed control algorithm executed by the electronic processor also may include in response to determining that the closest distance is less than the second distance threshold, controlling the at least one wheel motor to move the robotic garden tool backward at a third speed proportionate to the closest distance between the robotic garden tool and the closest object.

In addition to any combination of features described above, the electronic processor may be configured to execute a steering control algorithm that may include any one or a combination of controlling the at least one wheel motor to move the robotic garden tool in a first straight line forward in response to determining that the object detection data indicates the absence of any objects; in response to determining that the object detection data indicates that the at least one object is present within the detection area, determining whether a left portion or a right portion of the detection area includes more objects; and controlling the at least one wheel motor to turn the robotic garden tool in a direction away from a portion of the detection area that includes (i) more objects, (ii) more data points representative of objects, or (iii) both (i) and (ii).

In addition to any combination of features described above, the electronic processor may be configured to determine, based on the object detection data, a farthest x-coordinate distance of a farthest x-coordinate object from a center axis that runs through a center of the robotic garden tool in a direction parallel to a forward path of movement of the robotic garden tool. In addition to any combination of features described above, the electronic processor may be configured to control the at least one wheel motor to turn the robotic garden tool according to a turning angle that is a

2

function of the farthest x-coordinate distance of the farthest x-coordinate object.

In addition to any combination of features described above, the function may indicate that the turning angle increases as the farthest x-coordinate distance of the farthest x-coordinate object increases.

In addition to any combination of features described above, the electronic processor may be configured to determine the farthest x-coordinate distance of the farthest x-coordinate object from the center axis from among one or more first objects that are located on a portion of the detection area that includes less objects.

In addition to any combination of features described above, the electronic processor may be configured to determine, based on the object detection data, a closest x-coordinate distance of a closest x-coordinate object from a center axis that runs through a center of the robotic garden tool in a direction parallel to a forward path of movement of the robotic garden tool. In addition to any combination of features described above, the electronic processor may be configured to control the at least one wheel motor to turn the robotic garden tool according to a turning angle that is a function of the closest x-coordinate distance of the closest x-coordinate object.

In addition to any combination of features described above, the function may indicate that the turning angle increases as the closest x-coordinate distance of the closest x-coordinate object increases.

In addition to any combination of features described above, the electronic processor may be configured to determine the closest x-coordinate distance of the closest x-coordinate object from the center axis from among one or more first objects that are located on a portion of the detection area that includes less objects.

In addition to any combination of features described above, the electronic processor may be configured to, after controlling the at least one wheel motor to turn the robotic garden tool, control the at least one wheel motor to complete a turn and travel in a second straight line forward in response to determining that the object detection data indicates the absence of any objects.

In addition to any combination of features described above, the robotic garden tool may include a bump sensor configured to sense when the housing bumps into an object. In addition to any combination of features described above, the electronic processor may be coupled to the bump sensor and may be configured to determine that the housing has bumped the object based on bump sensor data from the bump sensor. In addition to any combination of features described above, the electronic processor may be configured to control the at least one wheel motor to move the robotic garden tool in a second direction opposite to a first direction in which the robotic garden tool was moving when the electronic processor determined that the housing bumped the object.

In addition to any combination of features described above, the object detection sensor may include a millimeter wave radar device.

In addition to any combination of features described above, the first distance threshold may be approximately equal to a maximum detectable range of the object detection sensor.

Another embodiment includes a method of controlling a robotic garden tool. The method may include receiving, with an electronic processor of the robotic garden tool, object detection data from an object detection sensor of the robotic garden tool, wherein the object detection data indicates a respective position of each of one or more objects with respect to the robotic garden tool. The method may also include executing, with the electronic processor of the robotic garden tool, a speed control algorithm that may include determining, with the electronic processor and based on the object detection data, whether any objects are present within a detection area of the object detection sensor. The speed control algorithm executed as part of the method may also include in response to determining that the object detection data indicates an absence of any objects in the detection area, controlling at least one wheel motor to move the robotic garden tool forward at a first speed. The at least one wheel motor may be coupled to one or more wheels of a set of wheels coupled to a housing of the robotic garden tool and configured to rotate to propel the robotic garden tool on an operating surface. The at least one wheel motor may be configured to drive rotation of the one or more wheels. The speed control algorithm executed as part of the method may also include in response to determining that the object detection data indicates that at least one object is present within the detection area, determining, with the electronic processor, a closest distance of a closest object to the robotic garden tool based on the object detection data. The speed control algorithm executed as part of the method may also include determining whether the closest distance between the closest object and the robotic garden tool is greater than or equal to a first distance threshold. The speed control algorithm executed as part of the method may also include in response to determining that the closest distance is greater than or equal to the first distance threshold, controlling the at least one wheel motor to move the robotic garden tool forward at the first speed. The speed control algorithm executed as part of the method may also include in response to determining that the closest distance is less than the first distance threshold, controlling the at least one wheel motor to move the robotic garden tool forward at a second speed proportionate to the closest distance between the robotic garden tool and the closest object. The second speed may be less than the first speed.

In addition to any combination of features described above, executing the speed algorithm may further include any one or a combination of in response to determining that the closest distance is less than the first distance threshold, determining, with the electronic processor, whether the closest distance is greater than or equal to a second distance threshold that is lower than the first distance threshold; in response to determining that the closest distance is less than the first distance threshold and greater than or equal to the second distance threshold, controlling, with the electronic processor, the at least one wheel motor to move the robotic garden tool forward at the second speed proportionate to the closest distance between the robotic garden tool and the closest object, and in response to determining that the closest distance is less than the second distance threshold, controlling the at least one wheel motor to move the robotic garden tool backward at a third speed inversely proportionate to the closest distance between the robotic garden tool and the closest object.

In addition to any combination of features described above, the method may include executing, with the electronic processor, a steering control algorithm that includes any one or a combination of controlling the at least one wheel motor to move the robotic garden tool in a first straight line forward in response to determining that the object detection data indicates the absence of any objects; in response to determining that the object detection data indicates that the at least one object is present within the detection area, determining whether a left portion or a right portion of the detection area includes more objects; and controlling the at least one wheel motor to turn the robotic garden tool in a direction away from a portion of the detection area that includes (i) more objects, (ii) more data points representative of objects, or (iii) both (i) and (ii).

In addition to any combination of features described above, executing the steering control algorithm may include, after controlling the at least one wheel motor to turn the robotic garden tool, controlling the at least one wheel motor to complete a turn and travel in a second straight line forward in response to determining that the object detection data indicates the absence of any objects.

In addition to any combination of features described above, the first distance threshold may be approximately equal to a maximum detectable range of the object detection sensor.

Another embodiment includes a robotic garden tool that may include a housing, and a set of wheels coupled to the housing and configured to rotate to propel the robotic garden tool on an operating surface. The robotic garden tool may also include at least one wheel motor coupled to one or more wheels of the set of wheels. The at least one wheel motor may be configured to drive rotation of the one or more wheels. The robotic garden tool may also include an object detection sensor configured to detect one or more objects. The robotic garden tool may also include an electronic processor in communication with the object detection sensor and configured to control the at least one wheel motor to move the robotic garden tool on the operating surface by receiving object detection data from the object detection sensor. The object detection data may indicate a respective position of each of the one or more objects with respect to the robotic garden tool. The electronic processor may be further configured to executing a steering control algorithm that may include determining, with the electronic processor and based on the object detection data, whether any objects are present within a detection area of the object detection sensor. The speed control algorithm executed by the electronic processor also may include controlling the at least one wheel motor to move the robotic garden tool in a first straight line forward in response to determining that the object detection data indicates an absence of any objects in the detection area. The speed control algorithm executed by the electronic processor also may include determining that the object detection data indicates that at least one object is present within the detection area. The speed control algorithm executed by the electronic processor also may include in response to determining that the object detection data indicates that the at least one object is present within the detection area, determining whether a left portion or a right portion of the detection area includes more objects. The speed control algorithm executed by the electronic processor also may include controlling the at least one wheel motor to turn the robotic garden tool in a direction away from a portion of the detection area that includes (i) more objects, (ii) more data points representative of objects, or (iii) both (i) and (ii).

In addition to any combination of features described above, the electronic processor may be configured to determine, based on the object detection data, a farthest x-coordinate distance of a farthest x-coordinate object from a center axis that runs through a center of the robotic garden tool in a direction parallel to a forward path of movement of the robotic garden tool. In addition to any combination of features described above, the electronic processor may be configured to control the at least one wheel motor to turn the robotic garden tool according to a turning angle that is a function of the farthest x-coordinate distance of the farthest x-coordinate object.

In addition to any combination of features described above, the electronic processor may be configured to, after controlling the at least one wheel motor to turn the robotic garden tool, control the at least one wheel motor to complete a turn and travel in a second straight line forward in response to determining that the object detection data indicates the absence of any objects.

Another embodiment includes a robotic tool that may include a housing, and a set of wheels coupled to the housing. The set of wheels may be configured to rotate to propel the robotic tool on an operating surface. The robotic tool may further include at least one wheel motor coupled to one or more wheels of the set of wheels. The at least one wheel motor may be configured to drive rotation of the one or more wheels. The robotic tool may further include a millimeter wave radar sensor configured to detect one or more objects. The millimeter wave radar sensor may be configured to operate at a frequency range from 57 gigahertz to 66 gigahertz. The robotic tool may further include an electronic processor in communication with the millimeter wave radar sensor and configured to control the at least one wheel motor to control movement of the robotic tool on the operating surface based on data received from the millimeter wave radar sensor.

In addition to any combination of features described above, the robotic tool may include a robotic garden tool configured to operate outdoors to perform a task.

In addition to any combination of features described above, the robotic garden tool may include a robotic mower, and wherein the task includes mowing a lawn.

In addition to any combination of features described above, the electronic processor may be configured to detect, based on the data received from the millimeter wave radar sensor, a presence of precipitation in an operating area of the robotic tool.

In addition to any combination of features described above, the millimeter wave radar sensor may include a transmitting antenna and a receiving antenna. The transmitting antenna, the receiving antenna, or both the transmitting antenna and the receiving antenna may have a smaller surface area than an antenna of a second radar sensor that operates at a second frequency range below the frequency range from 57 gigahertz to 66 gigahertz.

In addition to any combination of features described above, the millimeter wave radar sensor may be mounted to the robotic tool at a first predetermined distance from a front edge of the housing in a rearward direction toward a rear of the robotic tool. The first predetermined distance may be selected such that a first width of a maximum horizontal angular field of the millimeter wave radar sensor at a point when a radio wave emitted by the millimeter wave radar sensor passes the front edge of the housing is approximately equal to a second width of the robotic tool.

In addition to any combination of features described above, the millimeter wave radar sensor may be mounted to the robotic tool at a first predetermined height from the operating surface. The electronic processor may be configured to control the robotic tool to stop moving to prevent a detected obstacle from entering a dead zone of the millimeter wave radar sensor. The millimeter wave radar sensor may be unable to detect any obstacles located in the dead zone with respect to the robotic tool. The dead zone may be located immediately in front of the robotic tool and may be at least partially defined by a second predetermined distance from the front edge of the housing in a forward direction away from the housing. The second predetermined distance may be based on the first predetermined distance, the first predetermined height, an output angle range of a maximum vertical angular field of the millimeter wave radar sensor, and a tilt angle at which the millimeter wave radar sensor is mounted with respect to an axis parallel to the operating surface.

In addition to any combination of features described above, the electronic processor may be configured to control the robotic tool to stop moving to attempt to keep the robotic tool greater than or equal to the second predetermined distance away from the detected obstacle.

In addition to any combination of features described above, an output angle range of the maximum horizontal angular field of the millimeter wave sensor may be different than the output angle range of the maximum vertical angular field of the millimeter wave sensor.

In addition to any combination of features described above, the millimeter wave radar sensor may be mounted on top of the housing.

In addition to any combination of features described above, the millimeter wave radar sensor may be mounted inside of the housing below a top surface of the housing.

In addition to any combination of features described above, the robotic tool may include a charging interface including at least one conductive terminal, the at least one conductive terminal configured to couple to a corresponding terminal of a docking station to receive charging current from the docking station. In addition to any combination of features described above, the charging interface and the millimeter wave radar sensor may be mounted on the robotic tool such that the at least one conductive terminal of the charging interface does not interfere with the millimeter wave radar sensor sensing obstacles outside of the housing of the robotic tool.

In addition to any combination of features described above, the at least one conductive terminal of the charging interface may be mounted outside of a maximum angular field of view of the millimeter wave sensor.

In addition to any combination of features described above, the robotic tool may include a transducer configured to generate first vibrations at a predetermined frequency, wherein the first vibrations are applied to the millimeter wave radar sensor.

In addition to any combination of features described above, the robotic tool may include a vibration damper configured to dampen second vibrations randomly experienced by the robotic tool during operation.

In addition to any combination of features described above, millimeter wave radar sensor may be configured to detect a human frequency pattern that is indicative of a presence of a human.

In addition to any combination of features described above, the millimeter wave radar sensor may be configured to detect an object that has a height greater than a predetermined height. In addition to any combination of features described above, the electronic processor may be configured to stop the at least one wheel motor from rotating to stop the robotic tool from moving in response to detecting the object that has the height greater than the predetermined height. In addition to any combination of features described above, the electronic processor may be configured to analyze the data received from the millimeter wave radar sensor to detect whether a frequency component of the data corresponds to the human frequency pattern. In addition to any combination of features described above, the electronic processor may be configured to in response to determining that the frequency component of the data corresponds to the human frequency pattern, determine that the object is a human.

In addition to any combination of features described above, the electronic processor may be configured to analyze the data received from the millimeter wave radar sensor to recognize a gesture being made by the human. In addition to any combination of features described above, the electronic processor may be configured to control the robotic tool based on the gesture being made by the human.

Another embodiment includes a method of operating a robotic tool. The method may include driving, with at least one wheel motor, rotation of one or more wheels of a set of wheels coupled to a housing of the robotic tool. The set of wheels may be configured to rotate to propel the robotic tool on an operating surface. The method may further include detecting, with a millimeter wave radar sensor of the robotic tool, one or more objects. The millimeter wave radar sensor may be configured to operate at a frequency range from 57 gigahertz to 66 gigahertz. The method may further include controlling, with an electronic processor of the robotic tool, the at least one wheel motor to control movement of the robotic tool on the operating surface based on data received from the millimeter wave radar sensor.

Another embodiment includes a robotic garden tool that may include a housing, and a set of wheels coupled to the housing. The set of wheels may be configured to rotate to propel the robotic garden tool on an operating surface. The robotic garden tool may further include at least one wheel motor coupled to one or more wheels of the set of wheels. The at least one wheel motor may be configured to drive rotation of the one or more wheels. The robotic garden tool may further include a millimeter wave radar sensor configured to detect one or more objects. The robotic garden tool may further include an electronic processor in communication with the millimeter wave radar sensor and configured to control the at least one wheel motor to control movement of the robotic garden tool on the operating surface based on data received from the millimeter wave radar sensor. The robotic garden tool may further include a transducer configured to generate first vibrations at a predetermined frequency. The first vibrations may be applied to the millimeter wave radar sensor.

Other aspects of the disclosure will become apparent by consideration of the detailed description and accompanying drawings.

BRIEF DESCRIPTION OF THE DRAWINGS

FIG. 1A illustrates a communication system including a robotic garden tool according to some example embodiments.
FIG. 1B illustrates a bottom perspective view of the robotic garden tool of FIG. 1A according to some example embodiments.
FIG. 2 is a block diagram of the robotic garden tool of FIGS. 1A and 1B according to some example embodiments.
FIG. 3 is a block diagram of the external device of FIG. 1A according to some example embodiments.
FIGS. 4A and 4B illustrate a flowchart of a method of a speed control algorithm that may be performed by the robotic garden tool of FIGS. 1A, 1B, and 2 to control a speed and/or travel direction of the robotic garden tool according to some example embodiments.
FIG. 5 illustrates a flowchart of a method of a steering control algorithm that may be performed by the robotic garden tool of FIGS. 1A, 1B, and 2 to control when and how the robotic garden tool turns when objects are detected by the robotic garden tool according to some example embodiments.
FIG. 6 illustrates an example use case of the robotic garden tool shown in FIGS. 1A, 1B, and 2 including an example detection area of the robotic garden tool according to some example embodiments.
FIG. 7A illustrates a perspective view of the robotic garden tool of FIG. 1A and a zoomed-in view of an interface removably attached to the robotic garden tool according to some example embodiments.
FIG. 7B illustrates the zoomed-in view of the interface of FIG. 7A with a sensor cover removed, according to some example embodiments
FIG. 8 illustrates a perspective view of a compartment on a housing of the robotic garden tool of FIG. 1A according to some example embodiments.
FIGS. 9A-9D illustrate perspective views of the removably attachable interface of FIG. 7A according to some example embodiments.
FIG. 10 illustrates a top view of the robotic garden tool of FIG. 1A with labels for different dimensions and angles of details associated with a millimeter wave radar sensor included on the robotic garden tool according to some example embodiments.
FIG. 11 illustrates a side view of the robotic garden tool of FIG. 1A with labels associated with different possible locations of the millimeter wave radar sensor according to some example embodiments.
FIG. 12 illustrates a simplified side view of the robotic garden tool of FIG. 1A with more detailed labels for different dimensions and angles of details associated with the millimeter wave radar sensor included on the robotic garden tool according to some example embodiments.

DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising" or "having" and variations thereof herein is meant to encompass the items listed thereafter and equivalents thereof as well as additional items. The terms "mounted," "connected" and "coupled" are used broadly and encompass both direct and indirect mounting, connecting and coupling. Further, "connected" and "coupled" are not restricted to physical or mechanical connections or couplings, and can include electrical connections or couplings, whether direct or indirect.

It should be noted that a plurality of hardware and software based devices, as well as a plurality of different structural components may be utilized to implement the invention. Furthermore, and as described in subsequent paragraphs, the specific configurations illustrated in the drawings are intended to exemplify embodiments of the invention and that other alternative configurations are possible. The terms "processor," "central processing unit," and "CPU" are interchangeable unless otherwise stated. Where the terms "processor" or "central processing unit" or "CPU" are used as identifying a unit performing specific functions, it should be understood that, unless otherwise stated, those functions can be carried out by a single processor, or multiple processors arranged in any form, including parallel processors, serial processors, tandem processors or cloud processing/cloud computing configurations.

Throughout this application, the term "approximately" may be used to describe the dimensions of various components and/or paths of travel of a robotic garden tool. In some situations, the term "approximately" means that the described dimension is within 1% of the stated value, within 5% of the stated value, within 10% of the stated value, or the like. When the term "and/or" is used in this application, it is intended to include any combination of the listed components. For example, if a component includes A and/or B, the component may include solely A, solely B, or A and B.

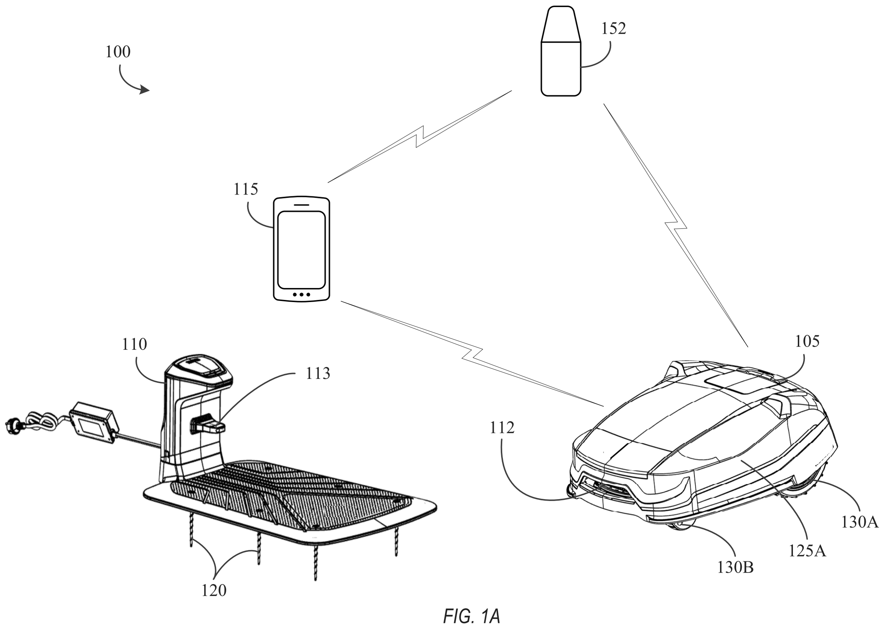

FIG. 1A illustrates a communication system 100 that may include a robotic tool 105 (e.g., a robotic garden tool 105 that may be a robotic lawn mower 105 that may also be referred to as a robotic mower 105), a docking station 110 for the robotic mower 105, an external device 115, and a server 152 according to some example embodiments. The robotic tool 105 is primarily described as being a robotic lawn mower 105. However, in other embodiments, the robotic tool 105 may be configured to operate outdoors and may include a tool for sweeping debris, vacuuming debris, clearing debris, collecting debris, moving debris, etc. Debris may include plants (such as grass, leaves, flowers, stems, weeds, twigs, branches, etc., and clippings thereof), dust, dirt, jobsite debris, snow, and/or the like. In some instances, the robotic tool 105 may be configured to operate indoors and may include a tool for vacuuming, mopping, etc. Example implementations of the robotic tool 105 may include a vacuum cleaner, a trimmer, a string trimmer, a hedge trimmer, a sweeper, a cutter, a plow, a blower, a snow blower, etc.

In some embodiments, a lawn may include any type of property that includes grass, a crop, some other material to be trimmed, cleared, gathered, etc., and/or that includes some material to receive treatment from the robotic garden tool 105 (e.g., fertilizer to treat grass in the lawn). In some embodiments, a lawn may include paved portions of a property (e.g., a driveway), for example, when the robotic garden tool 105 is used for snow plowing/removal.

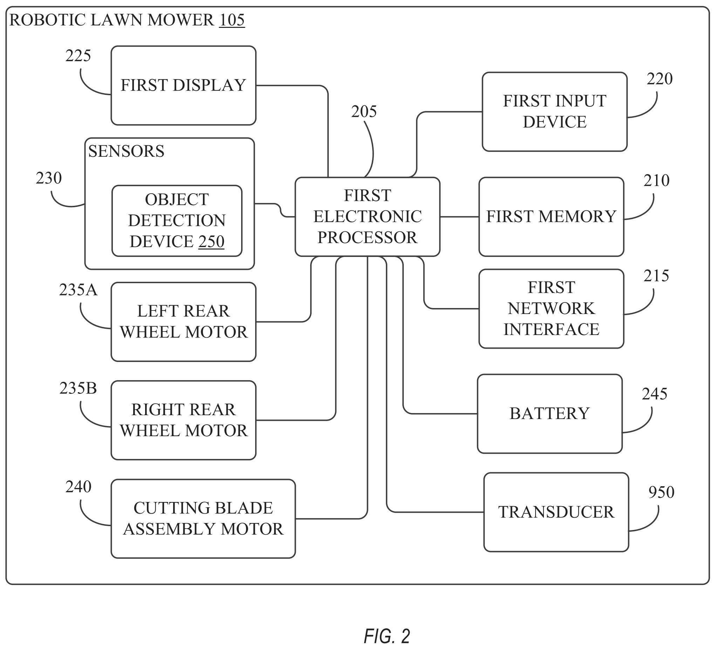

In some embodiments, the docking station 110 may be installed in a yard/lawn using stakes 120. The robotic mower 105 may be configured to mow the yard and dock at the docking station 110 in order to charge a battery 245 of the robotic mower 105 (see FIG. 2). The robotic mower 105 may include a first charging interface 112 that is configured to couple with a second charging interface 113 of the docking station 110. Each charging interface 112, 113 may include at least one conductive terminal (e.g., a metal terminal). For example, at least one conductive terminal of the first charging interface 112 may be configured to couple to a corresponding terminal of the second charging interface 113 of the docking station 110 to receive charging current from the docking station 110. In some embodiments, the docking station 110 is configured to make an electrical connection with a power supply (e.g., via a cord and plug connected to a wall outlet that is connected to a power grid) in order to provide charging current to the robotic mower 105 when the robotic mower 105 is electrically coupled with the docking station 110.

In some embodiments, the docking station 110 may also be electrically connected to a boundary cable (i.e., boundary wire). In some embodiments, the docking station 110 provides power to the boundary cable to control the boundary cable to provide/emit, for example, an electromagnetic signal that may be detected by the robotic mower 105. In some embodiments, the boundary cable may be any cable, wire, etc. that is configured to transmit a signal and that is configured to be installed on an operating surface (e.g., a yard including grass) in a discrete and unobtrusive manner (e.g., secured at the base of the blades of grass against the ground/soil in which the grass is growing to prevent the robotic mower 105 and other people or objects from being physically obstructed by the boundary cable). For example, a plurality of pegs/stakes may be used to pin the boundary cable to the ground/soil. As another example, the boundary cable may be buried in the ground/soil underneath the grass (e.g., if the boundary cable is installed when a plot of land is being developed). In some embodiments, in response to detecting the electromagnetic signal from the boundary cable, the robotic mower 105 is configured to control its movement such that the robotic mower 105 remains within a boundary defined by the boundary cable. For example, in response to detecting the boundary cable, the robotic mower 105 may be configured to stop moving forward and turn in a random direction to begin traveling in an approximately straight line until the robotic mower 105 again detects the boundary cable.

In some embodiments, the robotic mower 105 does not operate in conjunction with a boundary cable. Rather, the robotic mower 105 may include mapping capabilities, positioning tracking capabilities, and/or the like that allow the robotic mower 105 to remain within a predefined boundary (e.g., a virtual boundary) without the use of the boundary cable.

In some embodiments, the docking station 110 includes a docking cable loop, a magnet configured to be sensed by a magnetic sensor of the robotic mower 105, and/or another transmitting device configured to emit a docking signal that may be detected by the robotic mower 105. For example, the docking signal may indicate that the robotic mower 105 is near the docking station 110 and may allow the robotic mower 105 to take certain actions in response thereto to, for example, dock the robotic mower 105 at the docking station 110.

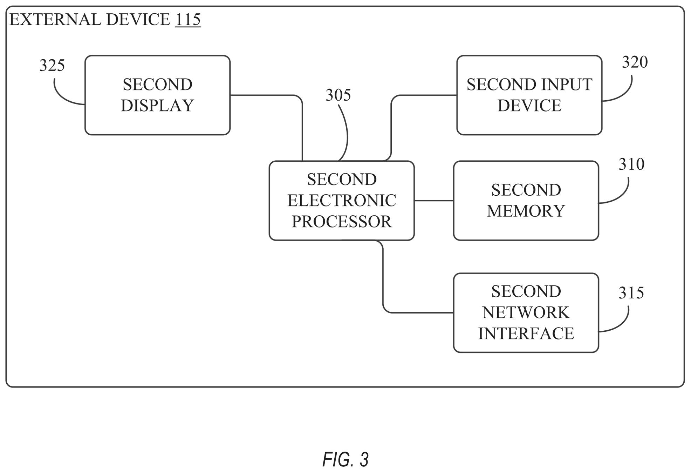

As indicated in FIG. 1A, in some embodiments, the robotic mower 105 is configured to bidirectionally wirelessly communicate with the external device 115 and/or the server 152. In some embodiments, the robotic mower 105 is configured to directly communicate with the external device 115 when the robotic mower 105 is within communication range of the external device 115 (e.g., via Bluetooth™, WiFi™, or the like). In some embodiments, the robotic mower 105 is additionally or alternatively configured to communicate with the external device 115 via an intermediary device such as the server 152, a cellular communication tower/base station, another device in a cellular network, or the like (e.g., when the robotic mower 105 is outside of direct communication range with the external device 115). The external device 115 may be, for example, a smart phone (as illustrated), a laptop computer, a tablet computer, a personal digital assistant (PDA), a wireless communication router that allows another external device 115 that is located remotely from the robotic mower 105 to communicate with the robotic mower 105, or another electronic device capable of communicating with the robotic mower 105. The external device 115 may generate a user interface on a display (e.g., second display 325 of FIG. 3) and allow a user to access and interact with robotic mower information. The external device 115 may receive user inputs to determine operational parameters/instructions for the robotic mower 105, enable or disable features of the robotic mower 105, and the like. In some embodiments, the communication between the external device 115 and the robotic mower 105 may be wired (e.g., via a Universal Serial Bus (USB) cord configured to connect to respective USB ports of the external device 115 and the robotic mower 105).

While FIG. 1A illustrates one robotic mower 105, one charging station 110, and one external device 115, in some embodiments, the communication system 100 includes additional robotic mowers 105, charging stations 110, and/or external devices 115. In some embodiments, a single external device 115 may be configured to communicate with multiple robotic mowers 105 to control and/or monitor the multiple robotic mowers 105. While FIG. 1A illustrates one server 152, in some embodiments, the communication system 100 includes additional servers 152. In some embodiments, the communication system 100 may not include any servers 152. While not shown in FIG. 1A, as mentioned above, in some embodiments, the communication system 100 may include a network such as a cellular network that includes one or more devices that act as an intermediary device to allow the robotic mower 105 to bidirectionally communicate with the external device 115 when the robotic mower 105 and the external device 115 are not within direct communication range of each other.

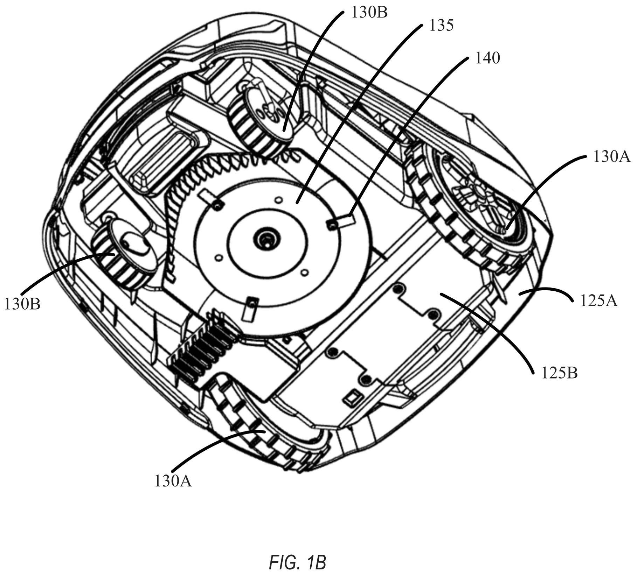

FIG. 1B illustrates a bottom perspective view of the robotic mower 105 according to some example embodiments. The robotic mower 105 may include a housing 125 that may include an outer housing 125A (i.e., outer housing shell) and an inner housing 125B. The outer housing 125A may be coupled to the inner housing 125B. The robotic mower 105 also may include wheels 130 (i.e., a set of wheels 130) coupled to the inner housing 125B and configured to rotate with respect to the housing 125 to propel the robotic mower 105 on an operating surface (e.g., a yard to be mowed). The wheels 130 may include motor-driven wheels 130A and non-motor-driven wheels 130B. In the embodiment shown in FIG. 1B, two rear wheels 130A are motor-driven wheels 130A while two front wheels 130B are non-motor-driven wheels 130B. In other embodiments, the robotic mower 105 may include a different wheel arrangement (e.g., a different number of total wheels, a different number of each type of wheel, different wheels being motor-driven or non-motor-driven, and/or the like). In some embodiments, the housing 125 may not include the outer housing 125A and the inner housing 125B. Rather, the housing 125 may include a single integrated body/housing to which the wheels 130 are attached.

In some embodiments, the robotic mower 105 includes a wheel motor 235 (see FIG. 2) coupled to one or more wheels 130 and configured to drive rotation of the one or more wheels 130. In some embodiments, the robotic mower 105 includes multiple wheel motors 235 where each wheel motor 235 is configured to drive rotation of a respective motor-driven wheel 130A (see FIG. 2).

In some embodiments, the robotic mower 105 includes a cutting blade assembly 135 coupled to the inner housing 125B and configured to rotate with respect to the housing 125 to cut grass on the operating surface. The cutting blade assembly 135 may include a rotating disc to which a plurality of cutting blades 140 configured to cut the grass are attached. In some embodiments, the robotic mower 105 includes a cutting blade assembly motor 240 (see FIG. 2) coupled to the inner housing 125B and to the cutting blade assembly 135. The cutting blade assembly motor 240 may be configured to drive rotation of the cutting blade assembly 135 to cut the grass on the operating surface.

In some embodiments, the robotic mower 105 and/or the docking station 110 include additional components and functionality than is shown and described herein.

FIG. 2 is a block diagram of the robotic mower 105 according to some example embodiments. In the embodiment illustrated, the robotic mower 105 includes a first electronic processor 205 (for example, a microprocessor or other electronic device). The first electronic processor 205 includes input and output interfaces (not shown) and is electrically coupled to a first memory 210, a first network interface 215, an optional first input device 220, an optional display 225, one or more sensors 230, a left rear wheel motor 235A, a right rear wheel motor 235B, a cutting blade assembly motor 240, and a battery 245. In some embodiments, the robotic mower 105 includes fewer or additional components in configurations different from that illustrated in FIG. 2. For example, the robotic mower 105 may not include the first input device 220 and/or the first display 225. As another example, the robotic mower 105 may include a location tracking device (e.g., a global positioning system (GPS) receiver) and/or a height adjustment motor configured to adjust a height of the cutting blade assembly 135. As yet another example, the robotic mower 105 may include additional sensors or fewer sensors than the sensors 230 described herein. In some embodiments, the robotic mower 105 performs functionality other than the functionality described below.

The first memory 210 may include read only memory (ROM), random access memory (RAM), other non-transitory computer-readable media, or a combination thereof. The first electronic processor 205 is configured to receive instructions and data from the first memory 210 and execute, among other things, the instructions. In particular, the first electronic processor 205 executes instructions stored in the first memory 210 to perform the methods described herein.

The first network interface 215 is configured to send data to and receive data from other devices in the communication system 100 (e.g., the external device 115, the server 152, etc.). In some embodiments, the first network interface 215 includes one or more transceivers for wirelessly communicating with the external device 115 and/or the docking station 110 (e.g., a first radio frequency (RF) transceiver configured to communicate via Bluetooth™, WiFi™, or the like). The first network interface 215 may include an additional transceiver for wirelessly communicating with the server 152 via, for example, cellular communication. In some embodiments, at least some of the transceivers and/or receivers of the robotic mower 105 may be combined or share some elements (e.g., an antenna and/or other hardware). Alternatively or additionally, the first network interface 215 may include a connector or port for receiving a wired connection to the external device 115, such as USB cable.

The first user input device 220 is configured to allow the first electronic processor 205 to receive a user input from a user to, for example, set/adjust an operational parameter of the robotic mower 105. The first display 225 is configured to display a user interface to the user. Similar to the user interface of the external device 115 described previously herein, the user interface displayed on the first display 225 may allow the user to access and interact with robotic mower information. In some embodiments, the first display 225 may also act as the first input device 220. For example, a touch sensitive input interface may be incorporated into the first display 225 to allow the user to interact with content provided on the first display 225. The first display 225 may be a liquid crystal display (LCD) screen, an organic light emitting display (OLED) display screen, or an E-ink display. In some embodiments, the first display 225 includes future-developed display technologies.

In some embodiments, the first electronic processor 205 is in communication with a plurality of sensors 230 that may include electromagnetic field sensors, radio frequency sensors (e.g., radio frequency identification (RFID) interrogators/sensors), Hall sensors, other magnetic sensors, and/or the like.

In some embodiments, the sensors 230 include one or more object detection devices 250 (i.e., object detection sensor 250). The object detection sensor 250 may include a millimeter wave radar device/sensor 250. The millimeter wave radar device 250 may transmit millimeter waves (e.g., radio waves with wavelengths that are millimeters in length such as between one and ten millimeter wavelengths) and receive echoes of the millimeter waves from objects (i.e., obstacles). In some instances, the millimeter wave radar sensor 250 is configured to operate at a frequency range between 30 gigahertz and 300 gigahertz. More specifically, the millimeter wave radar sensor 250 may be configured to operate at a frequency range from 57 gigahertz to 66 gigahertz. In some instances, the frequency range from 57 gigahertz to 66 gigahertz may be included in an unlicensed frequency band that is allocated for millimeter wave technology by a regulatory organization in one or more regions/locations where the robotic mower 105 is configured to operate. In some embodiments, the bandwidth of ten gigahertz that is provided by the frequency range from 57 gigahertz to 66 gigahertz provides better resolution in terms of speed compared to frequency ranges with smaller bandwidths. The frequency range from 57 gigahertz to 66 gigahertz is sensitive to oxygen and precipitation (e.g., rain) such that rain can be detected by the millimeter wave radar sensor 250 as explained in further detail below.

In some instances, the millimeter wave radar sensor 250 includes a transmitting antenna and a receiving antenna. The transmitting antenna may be configured to emit millimeter waves that may reflect off of objects. The receiving antenna may be configured to receive reflected millimeter waves that are used to determine the presence/absence of objects as well as information about a location of the objects with respect to the millimeter wave radar sensor 250 as explained in greater detail below. In some instances, the transmitting antenna, the receiving antenna, or both the transmitting antenna and the receiving antenna have a smaller surface area than a corresponding antenna of a second radar sensor that operates at a second frequency range (e.g., about 24 gigahertz according to conventional radar) that is below the frequency range from 57 gigahertz to 66 gigahertz. Accordingly, due to the millimeter wave radar sensor 250 operating at the frequency range from 57 gigahertz to 66 gigahertz, one or more antennas of the millimeter wave radar sensor 250 (and the sensor 250 itself) may be made in a compact manner to reduce an amount of space taken up in the robotic mower 105 while still providing accurate object sensing capabilities.

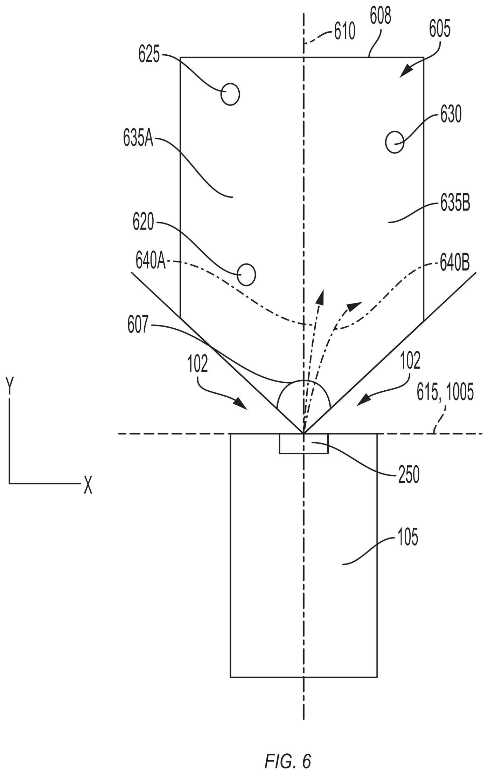

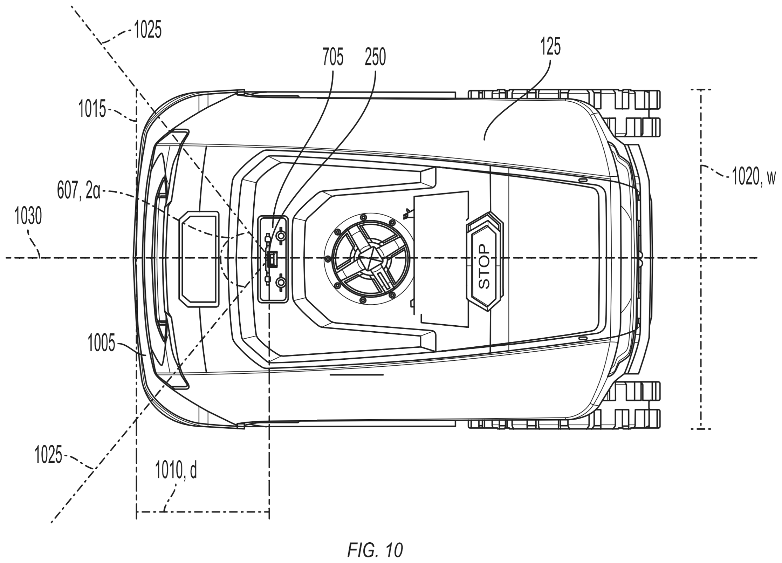

Using a millimeter wave radar sensor 250 on the robotic mower 105 may be particularly advantageous because millimeter waves may be able to penetrate most objects that may be encountered by the robotic mower 105 such as grass, rain, plastics, and the like. Accordingly, the millimeter wave radar sensor 250 may detect objects that are located behind other objects to determine a more complete landscape of objects within a detection angle range/detection area 605 (see FIG. 6) of the millimeter wave radar sensor 250. In some instances, millimeter waves may be able to penetrate through components of the robotic mower 105 that are not made of metal. For example, the millimeter waves may penetrate through plastic components of the robotic mower 105 such as the housing 125 such that the millimeter wave radar sensor 250 may be mounted inside of the housing 125 but still able to detect objects outside of the housing 125. While FIG. 6 shows the millimeter wave radar sensor 250 located at the front edge of the robotic mower 105, in some embodiments, the millimeter wave radar device 250 may be located at a first predetermined distance 1010 set back from the front edge of the robotic mower 105 as explained below (e.g., see FIG. 10).

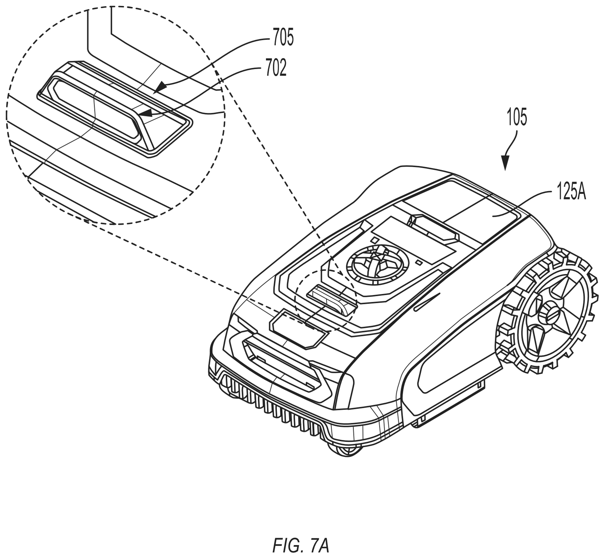

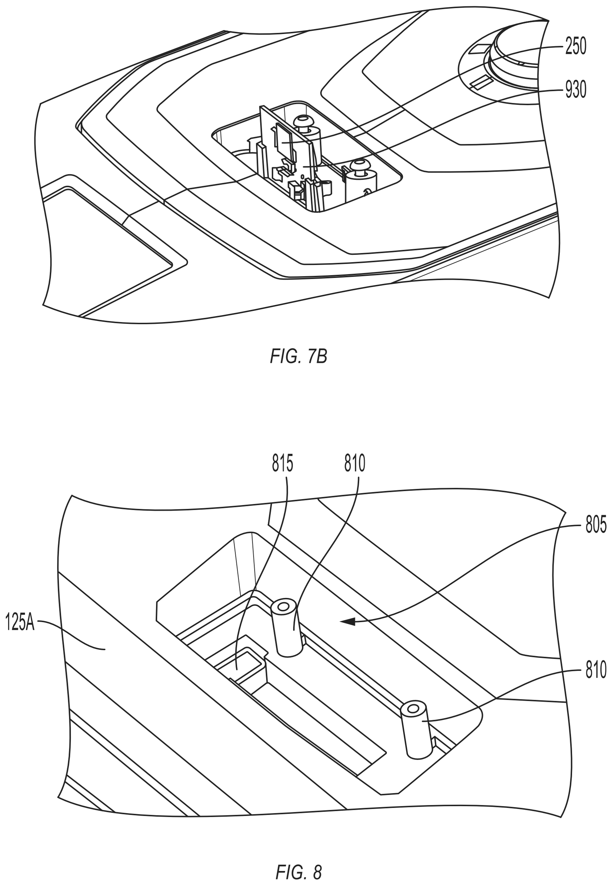

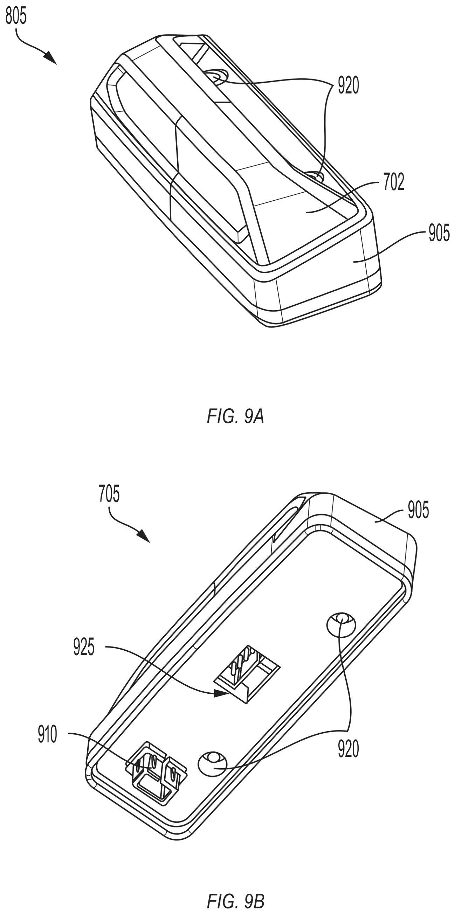

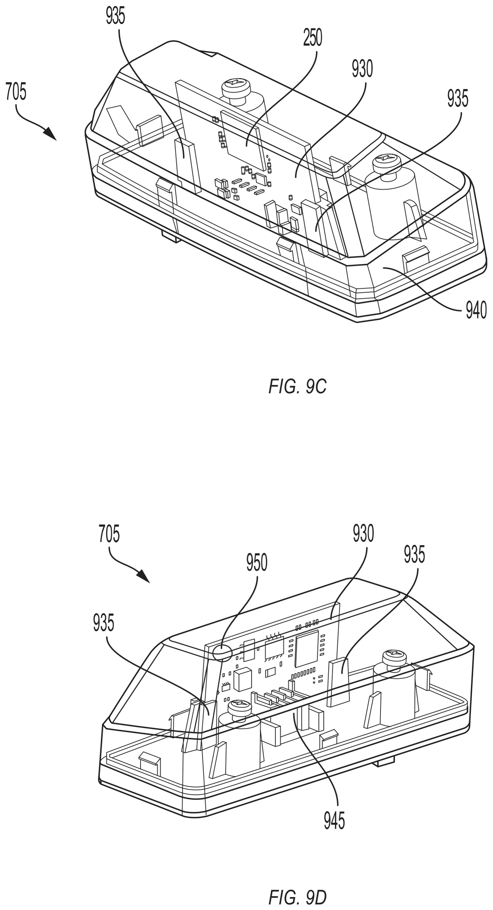

In some instances, the millimeter wave radar device 250 is located on top of the housing 125 and may protrude past a top surface of the housing 125 as shown in FIGS. 7A-7B. The millimeter wave radar device 250 may be covered by a sensor cover 702 that is part of the housing 125 or that is part of a separate interface 705 that houses the millimeter wave radar sensor 250. For example, the interface 705 includes an interface housing 905 (see FIG. 9) that may be removably attachable (e.g., using screws) to a top surface of the housing 125 of the robotic mower 105. FIG. 7B shows the interface 705 with the sensor cover 702 removed so that the millimeter wave radar sensor 250 is visible.

As indicated in the example shown in FIG. 8, the top surface of the housing 125 may include a compartment 805 configured to receive a bottom portion of the interface housing 905 while a top portion of the interface housing 905 protrudes upwardly from the compartment 805 (see FIG. 7A). The compartment 805 may include standoffs 810 configured to receive screws to secure the interface 705 in the compartment 805. The compartment 805 may also include a first protruding/indented part 815 configured to engage with a second protruding/indented part 910 of a bottom surface of the interface 705 to ensure that the interface 705 is installed in the compartment 805 correctly (e.g., facing in a desired direction). The compartment 805 also may include a through-hole (e.g., on its bottom surface, for example, where the protruding/indented part 910 is received and/or in another location) to allow electrical wires and/or a connector from the robotic mower 105 to connect to one or more components within the interface 705 when the interface 705 is installed in the compartment 805.

FIGS. 9A-9D illustrate an example of the removably attachable interface 705 according to some example embodiments. The interface 705 may include the interface housing 905 to house the millimeter wave radar sensor 250. A bottom surface of the interface housing 905 may include the second protruding/indented part 910 to aid in properly installing and securing the interface 705 to the housing 125 of the robotic mower 105. The second protruding/indented part 910 may include a through-hole to allow wires and/or a connector to pass through. The interface housing 905 may also include screw holes 920 configured to receive screws to secure the interface 705 to the housing 125 of the robotic mower 105. In some instances, the interface 705 may be secured to the robotic mower 105 in other manners in addition to or as an alternative to using screws. The bottom surface of the interface housing 905 may also include a through-hole 925 to allow electrical wires and/or a connector from the robotic mower 105 to connect to one or more components within the interface 705 when the interface 705 is installed in the compartment 805.

FIGS. 9C and 9D illustrate the interface 705 with the interface housing 905 (which may include sensor cover 702) shown transparently to allow internal components of the interface 705 to be visible. As shown in the example of FIGS. 9C and 9D, the interface 705 may include a printed circuit board (PCB) 930 mounted in a standing orientation and being held by brackets 935 on a base 940 of the interface 705. The millimeter wave radar sensor 250 may be mounted on a forward-facing surface of the PCB 930. An interface connector 945 may be mounted on a rear-facing surface of the PCB 930. In some instances, the interface connector 945 may be mounted on the other side of the PCB 930 (i.e., a forward-facing surface of the PCB 930). Additional components may be mounted on either side of the PCB 930 as shown.

While the interface 705 is shown in FIGS. 9A-9D and explained above as a removable interface 705, in some instances, the interface 705 is integrated into the housing 125 and may be configured not to be removable.

In some instances, the robotic mower 105 includes a transducer 950 (e.g., a piezoelectric transducer) configured to generate first vibrations at a predetermined frequency that are applied to (i.e., experienced by) the millimeter wave radar sensor 250. While the explanation below refers to a single transducer 950, one or more transducers 950 may be located in various locations nearby the millimeter wave radar sensor 250 to provide the first vibrations to the millimeter wave radar sensor 250. For example, one or more transducers 950 may be mounted on the PCB 930 as shown in FIG. 9D. As another example, one or more transducers 950 may be mounted on the base 940 of the interface 705 that houses the millimeter wave radar sensor 250. As yet another example, one or more transducers 950 may be located on a wall of the compartment 805 between the compartment 805 and the housing 905 of the interface 705.

In some instances, the transducer 950 is coupled to the electronic processor 205 and a power source of the robotic mower 105 (e.g., the battery pack 245). The transducer 950 may be configured to be controlled by the electronic processor 205 to receive power from the power source to provide the first vibrations at the predetermined frequency. The predetermined frequency may be selected to be higher than a frequency of second vibrations that are typically and randomly experienced by the robotic mower 105 during operation. For example, while moving along an operating surface, the robotic mower 105 may experience vibrations (e.g., random vibrations) due to, for example, the operating surface being uneven, ridges/treads in the wheels 130 contacting the operating surface, and/or the like. The predetermined frequency at which the transducer 950 is configured to generate first vibrations may be selected to be a high frequency that is higher than the expected second vibrations experienced by the robotic mower 105 during operation. By consistently applying such first vibrations to the millimeter wave radar sensor 250, the functionality/accuracy of the millimeter wave radar sensor 250 is improved such that millimeter waves emitted and/or received by the millimeter wave radar sensor 250 are more distinguishable than when the consistent high frequency vibration is not applied to the millimeter wave radar sensor 250. For example, this consistent high frequency first vibration tends to reduce negative effects that second vibrations randomly experienced during operation have on the functionality/accuracy of the millimeter wave radar sensor 250.

In some embodiments, the robotic mower 105 may include a vibration damper configured to dampen the second vibrations randomly experienced by the robotic mower 105 during operation. In such embodiments, the vibration damper(s) may be located to attempt to dampen the second vibrations while having a lesser effect to dampen the first vibrations generated by the transducer 950. For example, when the transducer 950 is located on the PCB 930, the vibration damper may be located between the interface 705 and the housing 125. In some instances, the millimeter wave radar sensor 250 may be configured to electronically dampen/filter received signals before processing data and/or before providing data to the electronic processor 205.

In some instances, the millimeter wave radar sensor 250 is mounted to the robotic mower 105 at a location and in a position to minimize or eliminate blind spots/dead zones of the robotic mower 105. A blind spot/dead zone may be an area where the millimeter wave radar sensor 250 is unable to detect any obstacles, for example, because the dead zones are outside of a field of view of the millimeter wave radar sensor 250. For example, when the millimeter wave radar sensor 250 is mounted at a front edge 1005 of the robotic mower 105 (e.g., as shown in FIG. 6), there may be dead zones 102 immediately in front of the robotic mower 105 on the left side and the right side due to a width of a maximum horizontal angular field 607 (i.e., horizontal detection angle 607 or horizontal field of view 607) of the millimeter wave radar sensor 250 being less than 180 degrees. To reduce or eliminate such dead zones 102, the millimeter wave radar sensor 250 may be mounted to the robotic mower 105 at least a first predetermined distance 1010 from the front edge 1005 of the housing 125 in a rearward direction toward a rear of the robotic mower 105 as indicated in the top view of the robotic mower 105 shown in FIG. 10 (i.e., set back from the front edge 1005 of the housing 125).

In some instances, the first predetermined distance 1010 (d) from the front edge 1005 of the robotic mower 105 is selected (during design/manufacturing of the robotic mower 105) such that a first width 1015 of the maximum horizontal angular field 607 ($2\alpha$) of the millimeter wave radar sensor 250 at a point when a radio wave emitted by the millimeter wave radar sensor 250 passes the front edge 1005 of the housing 125 is approximately equal to a second width 1020 (w) of the robotic mower 105. In some instances, the first predetermined distance 1010 is determined using Equation 1 below, where d is the first predetermined distance 1010, w is the second width 1020 of the robotic mower 105, and $\alpha$ is half of the maximum horizontal angular field 607 of the millimeter wave radar sensor 250.

The second width 1020 (w) of the robotic mower 105 is known, for example, by measuring/selecting the second width 1020. Similarly, the maximum horizontal angular field 607 ($2\alpha$) is known from a specification sheet of the millimeter wave radar sensor 250 that is being used on the robotic mower 105. It is assumed that the millimeter wave radar sensor 250 emits radio waves symmetrically in a left-right direction such that an output angle of the maximum horizontal angular field 607 to the left is approximately the same as an output angle of the maximum horizontal angular field 607 to the right. Accordingly, an axis 1030 through a center of the millimeter wave radar sensor 250 (and also through the center of the robotic mower 105) in a direction parallel to a forward path of movement of the robotic mower 105 creates two right triangles as shown in FIG. 10. Using the known values of the second width 1020 (w) of the robotic mower 105 and the maximum horizontal angular field 607 ($2\alpha$) of the millimeter wave sensor 250, a desirable predetermined distance 1010 (d) may be determined using Equation 1 below.

$$\text{Equation 1:} \quad d \geq w/(2*\tan(\alpha))$$

Accordingly, using Equation 1, the first predetermined distance 1010 may be selected to be a value of d or greater in order to ensure that the width 1015 of the maximum horizontal angular field 607 of the millimeter wave radar sensor 250 is at least as wide as the width 1020 of the robotic mower 105 at a point when the radio wave emitted by the millimeter wave radar device 250 passes the front edge 1005 of the housing 125. In other words, lines 1025 that define a boundary of the width of the maximum horizontal angular field 607 of the millimeter wave radar sensor 250 (e.g., a horizontal detection area) respectively intersect corners of the housing 125 where the front edge 1005 intersects a side of the housing or such lines 1025 respectively intersect the sides of the housing 125 without intersecting the front edge 1005 of the housing (e.g., when the first predetermined distance 1010 is greater than d). As is apparent from FIG. 10, the predetermined distance 1010 may be increased (i.e., the millimeter wave radar sensor 250 may be located further rearwardly) to widen the width of the maximum horizontal angular field 607 of the millimeter wave radar sensor 250 at a point when the radio wave emitted by the millimeter wave radar device 250 passes the front edge 1005 of the housing 125, which does not create a left-right dead zone immediately in front of the robotic mower 105 for the millimeter wave radar sensor 250. In fact, increasing the predetermined distance 1010 increases a field of view of the sensor 250 in the left-right direction (i.e., a width of the field of view) at the point when the emitted radio waves pass the front edge 1005 of the robotic mower but may decrease a forward detection range of the sensor 250 with respect to the front edge 1005 of the robotic mower 105 since the millimeter wave radar sensor 250 is set back further.

In some instances, the millimeter wave radar sensor 250 is located in a centered position that is equidistant from a left side of the housing 125 and a right side of the housing 125. For example, the millimeter wave radar sensor 250 may be located along an axis 1030 through a center of the robotic mower 105 in a direction parallel to a forward path of movement of the robotic mower 105. In some instances, Equation 1 and the description above related to the first predetermined distance 1010 rely on the assumption that the millimeter wave radar sensor 250 will be located along the axis 1030 such that the radio waves emitted by the sensor 250 are symmetrically emitted in the left and right directions about the axis 1030.

As described above, a location of the millimeter wave radar sensor 250 along the axis 1030 may be selected to reduce or eliminate dead zones in front of the robotic mower 105 in the left-right direction. In some instances, a height at which the millimeter wave radar sensor 250 is mounted may also be selected (during design/manufacturing) to reduce or eliminate dead zones in front of the robotic mower 105 in the up-down direction (e.g., primarily in the down direction).

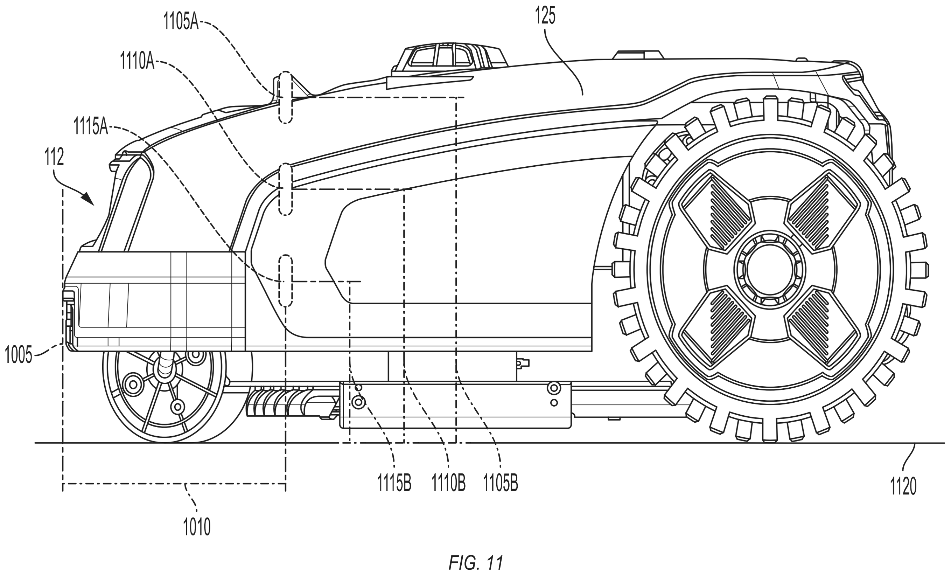

FIG. 11 is a side view of the robotic mower 105 and illustrates different example heights where the millimeter wave radar device 250 may be mounted to the robotic mower 105 according to various embodiments. For example, the millimeter radar wave sensor 250 may be mounted at location 1105A that has a height of 1105B from an operating surface 1120 on which the robotic mower 105 is configured to move/operate. The location 1105A may correspond to a location on top of the housing 125 as shown in FIGS. 7A and 7B. As other examples, the millimeter radar wave sensor 250 may be mounted inside the housing 125 (e.g., below a top surface of the housing 125) at a shorter height because millimeter radio waves output by the sensor 250 may be able to penetrate many components of the robotic mower 105 to detect objects in front of the robotic mower 105. For example, the millimeter wave radar sensor 250 may be mounted at location 1110A that has a height of 1110B or may be mounted at location 1115A that has a height of 1115B. Although FIG. 11 shows all three locations 1105A, 1110A, 1115A located at the predetermined distance 1010 from the front edge 1005 of the housing 125, as explained previously herein, the millimeter wave radar sensor 250 may also be located closer to a rear of the housing 125. Additionally, the three example heights 1105B, 1110B, 1115B are merely examples. The millimeter wave radar sensor 250 may be located at other heights in accordance with the disclosure.

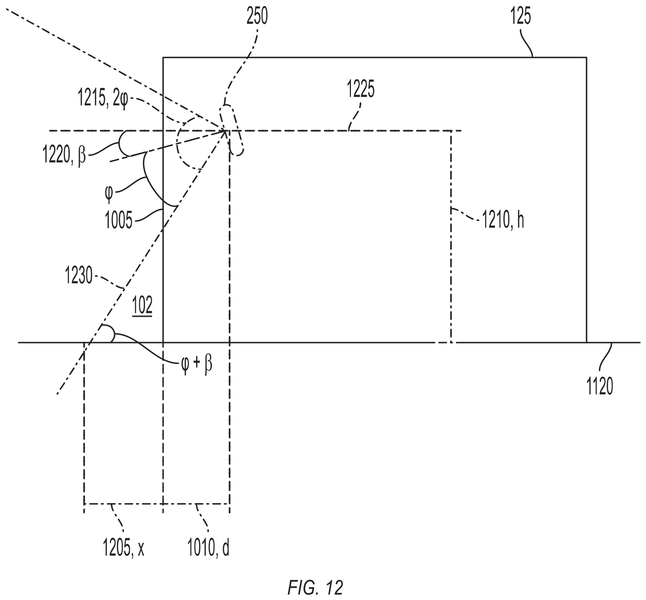

A plurality of factors affect a dead zone 102 of the millimeter wave radar sensor 250 in the up-down direction (e.g., primarily in the down direction) immediately in front of the housing 125. FIG. 12 is a schematic diagram of the robotic mower 105 that illustrates these factors. FIG. 12 is a schematic diagram from a side view of the robotic mower 105 similar to the side view shown in FIG. 11 but with a simpler representation of the housing 125 to allow for the relationships between different axes and angles to be shown clearly. When a dead zone 102 immediately in front of the robotic mower 105 is at least partially defined by a second predetermined distance 1205 (x) from the front edge 1005 of the housing 125 in a forward direction away from the housing 125, the second predetermined distance 1205 may be determined based on the first predetermined distance 1010 (d), a first predetermined height 1210 (h) of the millimeter wave radar sensor 250 from the operating surface 1120, an output angle range (2φ) of a maximum vertical angular field 1215 (i.e., a vertical field of view 1215 or vertical detection area 1215) of the millimeter wave radar sensor 250, and a tilt angle 1220 (β) at which the millimeter wave radar sensor 250 is mounted with respect to an axis 1225 parallel to the operating surface 1120.

In some instances, the first predetermined height 1210 is selected such that the second predetermined distance 1205 that defines the dead zone 102 is reduced, eliminated, or set to a desired distance according to Equation 2 below, where x is the second predetermined distance 1205, h is the predetermined height, φ is half of the maximum vertical angular field 1215 of the millimeter wave radar sensor 250, β is the tilt angle 1220 at which the millimeter wave radar sensor 250 is mounted with respect to an axis 1225 parallel to the operating surface 1120 (e.g., axis 1225 that is parallel to the operating surface 1120 and that runs through a center of the millimeter wave radar sensor 250), and d is the first predetermined distance 1010 (selected using Equation 1).

The predetermined height 1210 (h) is known because it is selected during design of the robotic mower 105. The maximum vertical angular field 1215 (2φ) is known from a specification sheet of the millimeter wave radar sensor 250 that is being used on the robotic mower 105. It is assumed that the millimeter wave radar sensor 250 emits radio waves symmetrically in an up-down direction such that an output angle of the maximum vertical angular field 1215 upward is approximately the same as an output angle of the maximum vertical angular field 1215 downward. Accordingly, the operating surface 1120, a line 1230 that defines a lower boundary of the height of the maximum vertical angular field 1215 of the millimeter wave radar sensor 250, and a vertical axis perpendicular to the operating surface 1120 and that passes through the millimeter wave radar sensor 250 create a right triangle with an angle with a value of $\varphi + \beta$ as shown in FIG. 12. In some instances, the tilt angle 1220 is known because it is selected during design of the robotic mower 105. In some instances, the tilt angle 1220 is selected to be greater than or equal to five degrees to attempt to make sure that a lower portion of the maximum vertical angular field 1215 of the millimeter wave radar sensor 250 is low enough to reduce or eliminate the dead zone 102 in front of the robotic mower 105. The first predetermined distance 1010 (d) is also known because it is selected during design of the robotic mower 105 using Equation 1 as explained above. Using the known values described above, the second predetermined distance 1205 (x) may be determined using Equation 2 below.

$$\text{Equation 2:} \quad x = (h \, / \, (\tan(\varphi + \beta))) - d$$

Using Equation 2, the second predetermined distance 1205 may be determined to be a value that is dependent on the above-noted known values and/or selected values associated with location, orientation, and functionality of the millimeter wave radar sensor 250 on the robotic mower 105. Using Equations 1 and 2, the location and orientation of the robotic mower 105 may be decided (during design/manufacturing) in accordance with goals of the designer. For example, a designer may desire to eliminate left-right dead zones using Equation 1 by ensuring that the predetermined distance 1010 is greater than a certain value as explained previously herein. As another example, the design may desire to locate the millimeter wave radar sensor 250 at a low enough predetermined height 1210 and/or at a large enough tilt angle 1220 to reduce or eliminate the dead zone 102 immediately in front of the robotic mower 105.

However, as indicated by Equations 1 and 2, adjustments to one parameter may affect other parameters, for example, such that the size of one or more dead zones 102 is changed as one or more parameters are changed. Accordingly, Equations 1 and 2 can be used to determine potentially desirable locations and orientations of the millimeter wave radar sensor 250 by informing a designer whether left/right dead zones 102 will be present and/or whether up/down (primarily downward) dead zones 102 will be present.

In some instances, the electronic processor 205 is configured to control the robotic mower 105 to stop moving to prevent a detected obstacle from entering a dead zone 102 of the millimeter wave radar sensor 250 (e.g., a downward dead zone 102 as shown in FIG. 12). For example, using Equations 1 and 2, the second predetermined distance 1205 that defines the downward dead zone 102 immediately in front of the robotic mower 105 may be determined and may be used when programming the electronic processor 205. For example, the electronic processor 205 may be configured to control the robotic mower 105 to stop moving in response to determining that the robotic mower 105 is at or getting near the second predetermined distance 1205 away from a detected obstacle. For example, the electronic processor 205 may be configured to control the robotic mower 105 to stop moving to attempt to keep the robotic mower 105 greater than or equal to the second predetermined distance 1205 away from the detected obstacle. In some instances, the electronic processor 205 may be configured to control the robotic mower 105 to stop moving (and/or control the robotic mower 105 to move backwards) in response to determining that the robotic mower 105 is within the second predetermined distance 1205 plus a buffer distance from the detected obstacle. Accordingly, the robotic mower 105 may be stopped before the detected obstacle enters the dead zone 102 where the obstacle can no longer be detected.

In some instances, the output angle range ($2\alpha$) of the maximum horizontal angular field 607 of the millimeter wave sensor 250 is different than the output angle range ($2\varphi$) of the maximum vertical angular field 1215 of the millimeter wave sensor 250. In other words, the output beam pattern from the millimeter wave radar sensor 250 is not necessarily conical in shape. However, in some instances, the output beam pattern from the millimeter wave radar sensor 250 is conical in shape with the output angle range ($2\alpha$) of the maximum horizontal angular field 607 of the millimeter wave sensor 250 being approximately the same as the output angle range ($2\varphi$) of the maximum vertical angular field 1215 of the millimeter wave sensor 250.

In addition to the considerations described above with respect to Equations 1 and 2, in some instances, the location and orientation of the millimeter wave radar sensor 250 is selected (during design/manufacturing) such that one or more metal components (e.g., the charging interface 112 of the robotic mower 105) does not interfere with the millimeter wave radar sensor 250 sensing obstacles outside of the housing 125 of the robotic mower 105. In some instances, radio waves emitted and received by the millimeter wave radar device 250 may be able to penetrate many components of the robotic mower 105 (e.g., plastic components such as the housing 125, etc.). However, the radio waves emitted and received by the millimeter wave radar device 250 may not be able to penetrate metal components such as one or more conductive terminals of the charging interface 112. Accordingly, the location and orientation of the robotic mower 105 may be selected such that metal components (e.g., at least one conductive terminal of the charging interface 112) are not located within the beam pattern (defined at least partially by the maximum horizontal angular field 607 and the maximum vertical angular field 1215) of the millimeter wave radar device 250.

Accordingly, in some instances, the predetermined height 1210 and/or the tilt angle 1220 is selected based on the location of metal components of the robotic mower 105 (e.g., the charging interface 112) to avoid the beam pattern of the millimeter wave radar sensor 250 passing through the metal components. For this reason, in some instances, the charging interface 112 may be located in other locations besides the front of the robotic mower 105. For example, the charging interface 112 may be located on a rear end of the robotic mower 105 to prevent interference with the millimeter wave radar sensor 250. In some instances, the charging interface 113 may be located at the front of the robotic mower 105 at a low position near the dead zone 102 (see FIG. 12) such that charging interface 112 does not interfere with the functionality of the millimeter wave radar sensor 250. In other words, in some instances, at least one conductive terminal (e.g., metal terminal) of the charging interface 112 is mounted outside of a maximum angular field of view (i.e., beam pattern) of the millimeter wave sensor 250.

In some instances, the millimeter wave radar sensor 250 determines data about each point (e.g., three-dimensional points in an x-y-z coordinate system) within the detection area/space 605 of the millimeter wave radar device 250. For example, for each point, the millimeter wave radar sensor 250 may determine a point identification, its respective x, y, and z coordinates, velocities in each direction x, y, and z of an object located at the point relative to the robotic mower 105, and a signal strength of the echoed signal that contacted the object located at the point. In some instances, the millimeter wave radar sensor 250 includes a built-in algorithm configured to group a plurality of adjacent points (i.e., a cluster of data points) as a single object/obstacle.

In some instances, the millimeter wave radar device 250 provides object detection data (e.g., processed data) to the first electronic processor 205 where the object detection data indicates information about each object (e.g., a size of each object based on a number of clustered/adjacent data points corresponding to the object, a location of each object including x-y coordinates of each object, x-y-z coordinates of each object, etc.) within the detection area 605 of the millimeter wave radar device 250. In other words, the object detection data may indicate a respective position of each of one or more objects with respect to the robotic garden tool 105. In some instances, the x-coordinate of an object indicates a distance of the object from a center axis 610 that runs through the millimeter wave radar device 250 and/or a center of the robotic mower 105 in a direction parallel to a forward path of movement of the robotic mower 105 (e.g., see FIG. 6). In some instances, the y-coordinate of the object indicates a distance of the object from an axis 615 that is perpendicular to the center axis 610 and runs along a front surface of the millimeter wave radar device 250 (i.e., along a front edge of the robotic mower 105 where the millimeter wave radar device 250 may be located) (e.g., see FIG. 6). In some instances, the first electronic processor 205 (and/or the millimeter wave radar device 250 itself) may determine a distance (e.g., a straight line distance that is a hypotenuse of a triangle created by the x-distance and the y-distance) between the object and the robotic mower 105 based on the x-coordinate and the y-coordinate of the object (e.g., using Pythagorean's theorem). In some instances, the first electronic processor 205 (and/or the millimeter wave radar device 250 itself) may additionally or alternatively take the z-coordinate into account when determining the distance between the object and the robotic mower 105. In some instances, the y-coordinate distance of an object may be used as the distance between the object and the robotic mower 105. As indicated by the above explanation, the first electronic processor 205 may determine a respective distance between the robotic mower 105 and each object within the detection area 605 based on the object detection data received from the millimeter wave radar device 250. The object detection data may also indicate a respective size of each of one or more objects based on a number of data points in a cluster that make up each object. For example, the more data points that are detected within a cluster of data points that represents an object, the larger the object is determined to be by the first electronic processor 205. As explained in greater detail herein, in some instances, the electronic processor 205 is configured to control the robotic mower 105 based on data received from the millimeter wave radar sensor 250. For example, the electronic processor 205 is configured to control at least one wheel motor 235 to control movement of the robotic mower 105 on the operating surface based on data received from the millimeter wave radar sensor 250.

In some instances, the electronic processor 205 is configured to detect, based on the data received from the millimeter wave radar sensor 250, a presence of precipitation (e.g., rain, sleet, snow, etc.) in an operating area of the robotic mower 105. In response to detecting precipitation, the robotic mower 105 may perform a specified action such as returning to the docking station 110.

In some instances, the millimeter wave radar sensor 250 is configured to detect a human frequency pattern that is indicative of a presence of a human. While the millimeter wave radar sensor 250 may be capable of detecting a human frequency pattern (i.e., a frequency pattern consistent with that of a human), it may be less accurate to attempt to detect a human when the robotic mower 105 is moving due to the high sensitivity of the millimeter wave radar sensor 250 to vibration (e.g., to the random second vibrations explained previously herein). Accordingly, in response to detecting an object that may be a human, the robotic mower 105 may stop moving to allow the millimeter wave radar sensor 250 to more accurately perform sensing. For example, the millimeter wave radar sensor 250 may be configured to detect an object that has a height greater than a predetermined height (e.g, two feet, three feet, etc.). The electronic processor 205 may be configured to stop the at least one wheel motor 235 from rotating to stop the robotic mower 105 from moving in response to detecting the object that has the height greater than the predetermined height. The electronic processor 205 may also be configured to analyze the data received from the millimeter wave radar sensor 250 to detect whether a frequency component of the data corresponds to the human frequency pattern. The electronic processor 205 may be further configured to, in response to determining that the frequency component of the data corresponds to the human frequency pattern, determine that the object is a human. In some instances, the electronic processor 205 may provide a notification indicating that a human has been detected. In some instances, the electronic processor 205 may monitor the detected human, for example, for a gesture that provides an operational instruction to the robotic mower 105.

For example, the electronic processor 205 may be configured to analyze the data received from the millimeter wave radar sensor 250 to recognize a gesture (e.g., a movement/motion/action) being made by the human. The electronic processor 205 may be further configured to control the robotic mower 105 based on the gesture being made by the human. For example, a human may be standing in an area in which they do want the robotic mower 105 to access for a temporary time period. The human may shake their hand at the robotic mower 105 to indicate that the robotic mower 105 should not enter the area near the human for, for example, 24 hours. As an alternative example, the above-explained gesture or another gesture may indicate that the robotic mower 105 should return to the docking station 110.

Throughout this disclosure, calculations/determinations are described as being made by the robotic mower 105, the electronic processor 205, and the millimeter wave radar sensor 250. It should be understood that calculations/determinations described as being made by the robotic mower 105 are made by one or more components of the robotic mower 105 (e.g., the electronic processor 205, the millimeter wave radar sensor 250, other sensors 230, and/or the like). It should also be understood that while certain calculations/determinations involving data gathered by the millimeter wave radar sensor 250 are described as being made by the millimeter wave radar device 250 or the electronic processor 205, in some instances, either of these components 205, 250 or both of these components 205, 250 separately or incombination may perform such calculations/determinations.

In some embodiments, the inner housing 125B includes at least two boundary cable sensors in the form of electromagnetic field sensors configured to detect an electromagnetic signal being emitted by the boundary cable. For example, the electromagnetic field sensors may be able to detect a strength and/or a polarity of the electromagnetic signal from the boundary cable.

In some embodiments, the inner housing 125B includes an odometry sensor (e.g., one or more Hall sensors or other types of sensors) for each motor-driven wheel 130A. Data from the odometry sensors may be used by the first electronic processor 205 to determine how far each wheel 130A has rotated and/or how fast each wheel 130A is rotating in order to accurately control movement (e.g., turning capabilities) of the robotic mower 105. For example, the first electronic processor 205 may control the robotic mower 105 to move in an approximately straight line by controlling both of the wheel motors 235A and 235B to rotate at approximately the same speed. As another example, the first electronic processor 205 may control the robotic mower 105 to turn and/or pivot (i.e., turn in place) in a certain direction by controlling one of the wheel motors 235A or 235B to rotate faster than or in an opposite direction than the other of the wheel motors 235A or 235B. Similarly, rotating only one of the wheel motors 235A or 235B while the other wheel motor 235A or 235B is not rotated should result in the robotic mower 105 turning/pivoting.

In some embodiments, the inner housing 125B includes a cutting blade assembly motor sensor (e.g., one or more Hall sensors or other types of sensors). Data from the cutting blade assembly motor sensor may be used by the first electronic processor 205 to determine how fast the cutting blade assembly 135 is rotating.

In some embodiments, the sensors 230 include one or more bump/collision sensors configured to provide data to the first electronic processor 205 that indicates the housing 125 of the robotic mower 105 has bumped into/collided with an object/obstacle. For example, the outer housing 125A and the inner housing 125B may each include sensors (e.g., magnetic sensors) that are displaceable with respect to each other when the robotic mower 105 has bumped into an object/obstacle. This displacement may be detected by the first electronic processor 205 to detect when the robotic mower 105 bumps into objects. Other bump/collision sensors are also possible including bump/collision sensors configured to be used with a single integrated body/housing.

In some instances, the first electronic processor 205 is coupled to the bump sensor and is configured to determine/sense that the housing 125 has bumped the object based on bump sensor data from the bump sensor. In some instances, the first electronic processor 205 is configured to control the at least one wheel motor 235 to move the robotic garden tool 105 in a second direction opposite to a first direction in which the robotic garden tool 105 was moving when the first electronic processor 205 determined that the housing 125 bumped the object. For example, in a situation where the robotic mower 105 is traveling in a forward direction when the first electronic processor 205 detects that a bump/collision has occurred, the first electronic processor 205 may stop movement of the robotic mower 105 and control the robotic mower 105 to move in a backwards/reverse direction. Conversely, in a situation where the robotic mower 105 is traveling in a backwards/reverse direction when the first electronic processor 205 detects that a bump/collision has occurred, the first electronic processor 205 may stop movement of the robotic mower 105 and control the robotic mower 105 to move in a forward direction. In some instances, the first electronic processor 205 may also control the robotic mower 105 to randomly turn when moving in the second direction opposite to the first direction to attempt to avoid the robotic mower 105 getting stuck between objects that may be located close each other.

In some embodiments, the battery 245 provides power to the first electronic processor 205 and to other components of the robotic mower 105 such as the motors 235A, 235B, 240 and the first display 225. In some embodiments, power may be supplied to other components besides the first electronic processor 205 through the first electronic processor 205 or directly to the other components. In some embodiments, when power is provided directly from the battery 245 to the other components, the first electronic processor 205 may control whether power is provided to one or more of the other components using, for example, a respective switch (e.g., a field-effect transistor) or a respective switching network including multiple switches. In some embodiments, the robotic mower 105 includes active and/or passive conditioning circuitry (e.g., voltage step-down controllers, voltage converters, rectifiers, filters, etc.) to regulate or control the power received by the components of the robotic mower 105 (e.g., the first electronic processor 205, the motors, 235A, 235B, 240, etc.) from the battery 245. In some embodiments, the battery 245 is a removable battery pack. In some embodiments, the battery 245 is configured to receive charging current from the docking station 110 when the robotic mower 105 is docked at the docking station 110 and electrically connected thereto.

FIG. 3 is a block diagram of the external device 115 according to some example embodiments. In the example shown, the external device 115 includes a second electronic processor 305 electrically connected to a second memory 310, a second network interface 315 (i.e., device network interface 315), a second user input device 320, and a second display 325. These components are similar to the like-named components of the robotic mower 105 explained above with respect to FIG. 2 and function in a similar manner as described above. For example, the second display 325 may also function as an input device (e.g., when the second display 325 is a touchscreen). In some embodiments, the second network interface 315 includes one or more transceivers for wirelessly communicating with the robotic mower 105 (e.g., a second RF transceiver configured to communicate via Bluetooth™, WiFi™, or the like). The second network interface 315 may include an additional transceiver for wirelessly communicating with the server 152 via, for example, cellular communication. The second network interface 315 may also include a GPS receiver configured to receive a location signal from one or more satellites. In some embodiments, at least some of the transceivers and/or receivers of the external device 115 may be combined or share some elements (e.g., an antenna and/or other hardware). In some embodiments, the second electronic processor 305 sends data to and receives data from the robotic mower 105 and/or other devices of the communication system 100 via the second network interface 315.

In some embodiments, the external device 115 includes fewer or additional components in configurations different from that illustrated in FIG. 3. For example, the external device 115 may include a battery, another GPS receiver, a camera, or the like. In some embodiments, the external device 115 performs functionality other than the functionality described below.

In some embodiments, the server 152 includes similar elements as at least some of the elements described above with respect to the devices 105, 115 that function in a similar manner. For example, the server 152 may include an electronic processor, a memory, and a network interface, among other elements.

In some embodiments, the robotic mower 105 travels within a virtual boundary of the operating area to execute a task (e.g., mowing a lawn). The robotic mower 105 may travel randomly within the operating area defined by the virtual boundary. For example, the robotic mower 105 may be configured to travel in an approximate straight line until the robotic mower 105 determines that it has reached the virtual boundary (or until the robotic mower 105 bumps into an object/obstacle). In response to detecting the virtual boundary, the robotic mower 105 may be configured to turn in a random direction and continue traveling in an approximate straight line along a new path until the robotic mower 105 again determines that it has reached the virtual boundary (or until the robotic mower 105 bumps into an object/obstacle), at which point this process repeats. In some embodiments, the robotic mower 105 may travel in a predetermined pattern within the operating area defined by the virtual boundary (e.g., in adjacent rows or columns between sides of the virtual boundary) to more efficiently and evenly mow the lawn within the operating area. In such embodiments, the robotic mower 105 may determine and keep track of its current location within the operating area.

As indicated herein, the operating area where the robotic mower 105 is configured to operate may include one or more objects/obstacles. These objects may include stationary objects such as a tree, a post for a mailbox or light, etc. and/or may include temporary/moving objects such as an animal, a child's toy, debris that has blown into the lawn, etc. Merely using the bump sensors to change a travel path of the robotic mower 105 after the robotic mower 105 has bumped an object may result in inefficient mowing and/or may result in scratches or other damage to the housing 125 of the robotic mower 105. Accordingly, there is a technological problem with controlling a robotic tool (e.g., a robotic garden tool) to navigate on in an operating area that includes permanent and/or temporary objects/obstacles.

The methods and devices described herein address the above-noted technological problem by implementing a speed control algorithm based on the proximity of the robotic garden tool 105 to a closest object and by implementing a steering control algorithm to make turns according to positions of objects within a detection area 605 of the object detection sensor 250. Embodiments described herein enable more efficient/precise control of the robotic mower 105 (e.g., that may otherwise move randomly within the operating area). Embodiments described herein may reduce an amount of times that the robotic garden tool 105 bumps into objects during a typical operation thus resulting in more efficient operation and less damage to the housing 125 of the robotic mower 105.

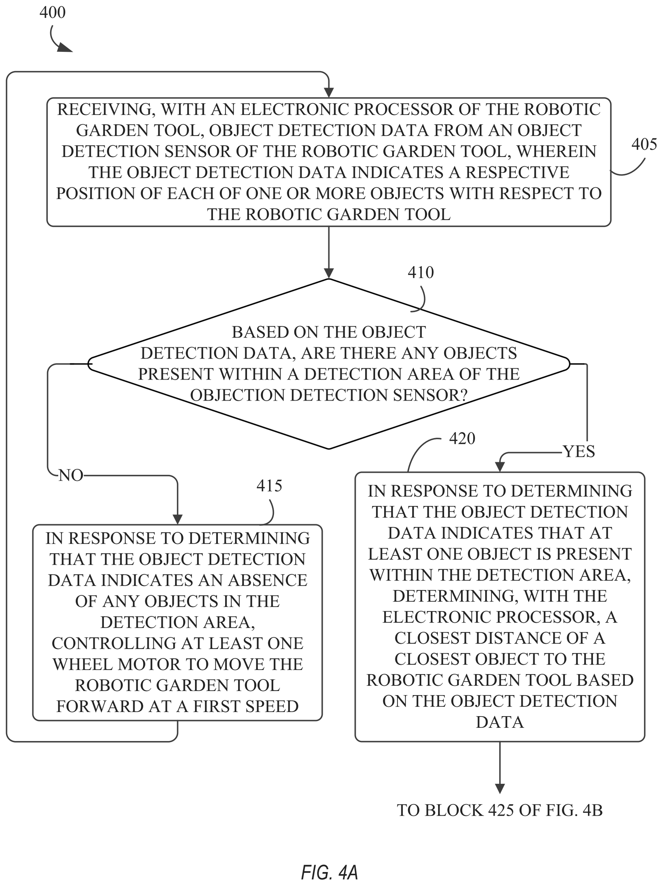

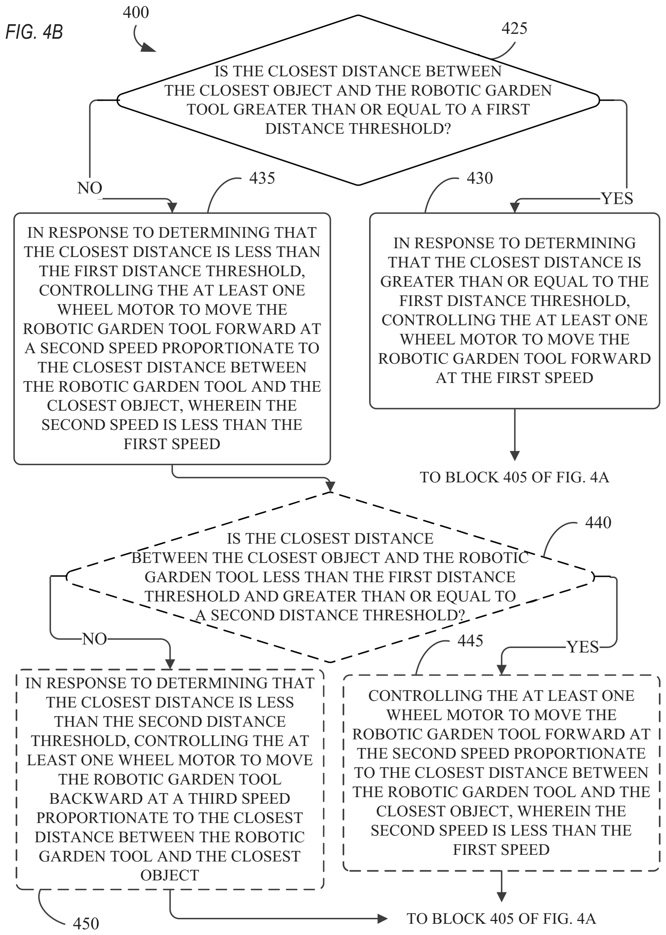

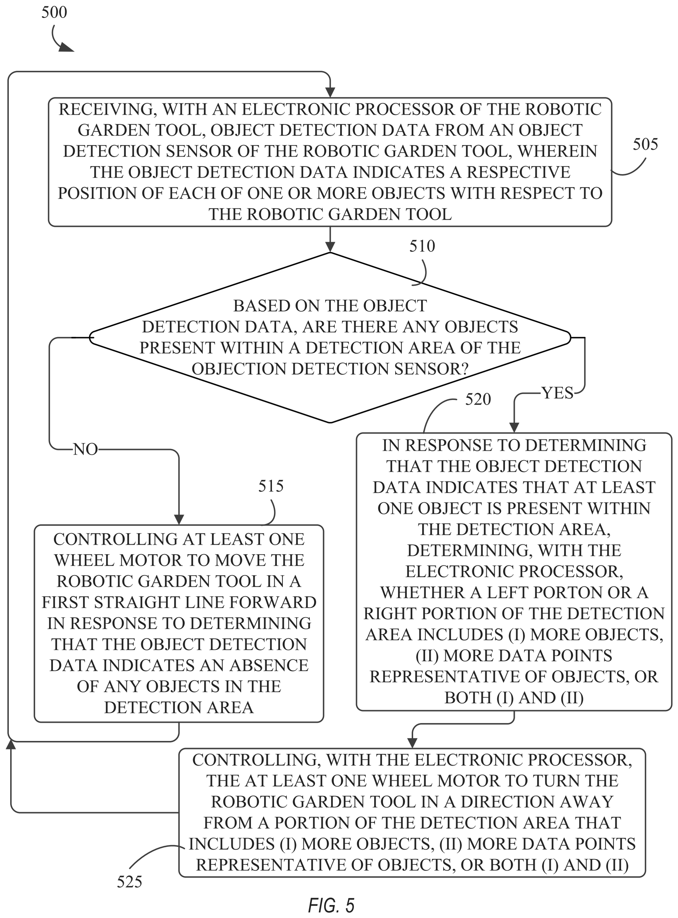

FIGS. 4A and 4B illustrate a flowchart of a method 400 of a speed control algorithm that may be performed by the first electronic processor 205 of the robotic mower 105 to control a speed and/or travel direction (e.g., forward/reverse travel direction) of the robotic mower 105 according to some example embodiments. FIG. 5 illustrates a flowchart of a method 500 of a steering control algorithm that may be performed by the first electronic processor 205 of the robotic mower 105 to control when and how the robotic mower 105 turns when objects are detected by the robotic mower 105 according to some example embodiments. In some instances, the methods 400 and 500 are performed independently of each other and in parallel with/at the same time as each other (i.e., simultaneously with each other or continuously repeated in series with each other such that, from the perspective of the user, the methods 400 and 500 are being performed at the same time). For example, the method 400 may be repeatedly performed to control a travel speed of the robotic mower 105 and a forward/reverse travel direction of the robotic mower 105 while the method 500 may be repeatedly performed to turn the robotic mower 105 left and/or right at the travel speed and travel direction determined by the method 400.

While a particular order of processing steps, signal receptions, and/or signal transmissions is indicated in FIGS. 4A, 4B, and 5 as an example, timing and ordering of such steps, receptions, and transmissions may vary where appropriate without negating the purpose and advantages of the examples set forth in detail throughout the remainder of this disclosure.

At block 405, the first electronic processor 205 receives object detection data from the object detection sensor 250 (e.g., a millimeter wave radar device 250). As explained previously herein, the object detection data may indicate a respective position of each of one or more objects/obstacles with respect to the robotic mower 105. In some instances, the object detection data indicates an absence of any objects within a detection area 605 (see FIG. 6) of the object detection sensor 250. In some instances, the object detection data indicates that at least one object/obstacle (i.e., one or more objects) is present within the detection area 605 and also indicates a respective position of each of the one or more objects within the detection area 605 (e.g., x and y coordinates of each object and a distance between each object and the robotic mower 105 as explained previously herein and as indicated in FIG. 6).

FIG. 6 illustrates an example use case of the robotic mower 105 including an example detection area 605 of the robotic mower 105 according to some example embodiments. In the example shown, the detection area 605 may be defined by a detection angle 607 of the object detection sensor 250 (e.g., a millimeter wave radar device 250). For example, the detection angle 607 may define an angle at which the object detection sensor 250 may accurately transmit and receive reflected millimeter waves in order to detect objects. Also as shown in the example of FIG. 6, the detection area 605 may be defined by a y-coordinate distance range 608 that may be a predetermined or maximum distance from the axis 615 at which the object detection sensor 250 may accurately transmit and receive reflected millimeter waves to detect objects. As explained previously herein, the axis 615 is perpendicular to the center axis 610 and runs along a front surface of the object detection sensor 250 (i.e., along a front edge of the robotic mower 105 where the object detection sensor 250 is located). Accordingly, the detection area 605 may define an area in which the object detection sensor 250 is programmed to detect objects. In some instances, objects outside of the detection area 605 may not be detectable by the object detection sensor 250 and/or the object detection sensor 250 may be configured not to provide object detection data regarding points/locations outside the detection area 605.

Although the example of FIG. 6 shows a single object detection sensor 250, as indicated previously herein, in other instances, the robotic mower 105 may include additional object detection sensors 250. For example, the robotic mower 105 may include two object detection sensors 250 spaced apart from each other along a front edge of the robotic mower 105 in a symmetric manner (e.g., equidistant from the center axis 610). In this example, the center axis 610 may be located between the two symmetric object detection sensors 250 through a center of the robotic mower 105. Using two object detection sensors 250 may increase a size of the detection area 605.

In some instances, the object detection sensor 250 is not located along a front edge of the robotic mower 105 and may instead be located on a top surface of the housing 125 in a position rearward of the front edge of the robotic mower 105. In such instances, the first electronic processor 205 and/or the object detection sensor 250 may be configured to take the positioning of the object detection sensor 250 on the housing 125 into account when determining coordinates of and/or distances to detected objects. For example, the first electronic processor 205 and/or the object detection sensor 250 may be configured to take into account a distance between the object detection device 250 and the front edge of the robotic mower 105 (e.g., four inches) when determining the coordinates of and/or distances to detected objects such that the coordinates and distances are determined with respect to a front edge of the robotic mower 105.

At block 410, the first electronic processor 205 begins to execute a speed control algorithm. In some instances, blocks 410 through 435 and/or blocks 410 through 450 are considered to be a speed control algorithm to control a travel speed and forward/reverse travel direction of the robotic mower 105. In some instances, block 405 may also be considered to be part of the speed control algorithm. At block 410, the first electronic processor 205 determines, based on the object detection data received from the object detection sensor 250 (at block 405), whether any objects are present within the detection area 605 of the object detection sensor 250.

At block 415, in response to determining that the object detection data indicates an absence of any objects within the detection area 605, the first electronic processor 205 controls the at least one wheel motor 235 to move the robotic mower 105 forward at a first speed. The first speed may include a full/normal speed of operation since there were not any objects detected in the detection area 605. After performing block 415 to control the robotic mower 105 to move forward at the first speed, the method 400 proceeds back to block 405 to repeatedly evaluate whether objects are present in the detection area 605 as well as repeatedly determine locations and/or distances of detected objects with respect to the robotic mower 105 to repeatedly adjust the travel speed and/or forward/reverse direction of the robotic mower 105 based on object detection data from the object detection sensor 250.

On the other hand, at block 420, in response to determining that the object detection data indicates that at least one object is present within the detection area 605, the first electronic processor 205 may determine a closest distance of a closest object to the robotic mower 105 based on the object detection data. For example, based on the respective coordinates of each object detected by the object detection sensor 250, the first electronic processor 205 may determine a respective distance of each object from the robotic mower 105 as explained previously herein. With reference to the example shown in FIG. 6, the first electronic processor 205 may be configured to determine that three objects have been detected within the detection area 605 and that object 620 is the closest object to the robotic mower 105. Accordingly, a distance between the object 620 and the robotic mower 105 (e.g., a distance between the object 620 and the object detection sensor 250 or a y-coordinate distance of the object 620 to a front edge of the robotic mower 105) may be determined to be the closest distance between the closest object 620 and the robotic mower 105. The method 400 may then proceed to block 425 of FIG. 4B.

With reference to FIG. 4B that also shows portions of the method 400, at block 425, the first electronic processor 205 determines whether the closest distance between the closest object 620 and the robotic mower 105 is greater than or equal to a first distance threshold (e.g., distance S1). For example, the first distance threshold may be a preprogrammed value such as 60 centimeters, 90 centimeters, or the like. In some embodiments, the first distance threshold is approximately equal to a maximum detectable range of the object detection sensor 250 or to the y-coordinate distance range 608 that may be a predetermined or maximum distance from the axis 615 at which the object detection sensor 250 may accurately transmit and receive reflected millimeter waves to detect objects. In such embodiments, if there are not any objects detected by the object detection sensor 250, the robotic mower 105 may travel at the first speed (e.g., full/normal speed of operation) (at block 415). However, if any objects are detected by the object detection sensor 250, the objects are each less than the first distance threshold away from the robotic mower 105 since the first distance threshold is approximately equal to the maximum detectable range of the object detection sensor 250 or to the y-coordinate distance range 608 that may be a predetermined or maximum distance from the axis 615 at which the object detection sensor 250 may accurately transmit and receive reflected millimeter waves to detect objects.

At block 430, in response to determining that the closest distance of the closest object is greater than or equal to the first distance threshold, the first electronic processor 205 controls the at least one wheel motor 235 to move the robotic mower 105 forward at the first speed (e.g., similar to block 415). After performing block 430 to control the robotic mower 105 to move forward at the first speed, the method 400 proceeds back to block 405 to repeatedly evaluate whether objects are present in the detection area 605 as well as repeatedly determine locations and/or distances of detected objects with respect to the robotic mower 105 to repeatedly adjust the travel speed of the robotic mower 105 based on object detection data from the object detection sensor 250.

On the other hand, at block 435, in response to determining that the closest distance of the closest object is less than the first distance threshold, the first electronic processor 205 controls the at least one wheel motor 235 to move the robotic mower 105 forward at a second speed proportionate to the closest distance between the robotic mower 105 and the closest object. In some instances, the second speed is less than the first speed (i.e., the second speed is a reduced speed compared to full/normal travel speed during an operation).

In some instances, the second speed is adjusted proportionately as the closest distance to the closest object changes to gradually reduce the travel speed of the robotic mower 105 further and further as the robotic mower 105 gets closer and closer to the closest object. Conversely, the second travel speed of the robotic mower 105 changes to gradually increase the travel speed of the robotic mower 105 further and further as the robotic mower 105 moves further and further away from the closest object. In some instances, a second speed range from which the second speed is determined by the first electronic processor 205 includes a first minimum speed and a first maximum speed. The first maximum speed may be slightly slower than the first speed (i.e., full/normal speed). For example, the first maximum speed may be 99%, 95%, 90%, 80%, or the like of the first speed. The first minimum speed may be 30%, 20%, 10%, or the like of the first speed. In some instances, the first minimum speed may be zero, which means the robotic mower 105 may stop moving forward when the robotic mower 105 detects the closest object within a certain distance of the robotic mower 105. In some of such instances where the first minimum speed is zero, the robotic mower 105 may stop moving forward when the robotic mower 105 detects the closest object within a certain distance of the robotic mower 105, but the robotic mower 105 may not necessarily stop moving altogether when the robotic mower 105 detects the closest object within a certain distance of the robotic mower 105. For example, if there is a forward moving turn in progress as the robotic mower 105 approaches the closest object, the robotic mower 105 may continue turning by pivoting in place (i.e., a spot turn) while ceasing to move forward. In instances when the first minimum speed is not zero, the robotic mower 105 may continue moving forward until a bump sensor indicates that the robotic mower 105 has bumped into an object. In response to detecting that the robotic mower 105 has bumped into an object, the robotic mower 105 may perform a predetermined maneuver (e.g., backing up and randomly turning before continuing to move forward).

In some instances, to adjust the second speed proportionately to the closest distance between the robotic mower 105 and the closest object, the first electronic processor 205 associates the first maximum speed (e.g., 5 centimeters per second) of the second speed range with a first distance of the first distance threshold (e.g., 60 centimeters) and associates the first minimum speed (e.g., 1 centimeter per second) of the second speed range with a second distance (e.g., 20 centimeters). Accordingly, in the above example, when the closest distance to the closest object is determined to be 60 centimeters, the robotic mower 105 travels forward at a speed of 5 centimeters per second, and when the closest distance to the closest object is determined to be 20 centimeters (or less), the robotic mower 105 travels forward at a speed of 1 centimeter per second. Values in between the above-noted speed and distances may also proportionately correspond to each other. For example, when the closest distance to the closest object is determined to be 40 centimeters, the robotic mower 105 travels forward at a speed of 3 centimeter per second.

In some instances, the closest object may change as the robotic mower 105 continues to move. For example, the robotic mower 105 may turn (as explained in greater detail below with respect to FIG. 5) such that the robotic mower 105 begins moving away from the object 620 and toward another object (e.g., object 630) that becomes the closest object to the robotic mower 105. As another example, a new object (e.g., a squirrel or other animal) may move into the detection area 605 and may become the closest object to the robotic mower 105. Regardless of which specific object is the closest object to the robotic mower 105, the robotic mower 105 repeatedly determines the closest distance of the closest object to the robotic mower 105 and may use this instantaneous closest distance to control movement of the robotic mower 105 (e.g., travel speed and forward/reverse travel direction) as the robotic mower 105 continues to move throughout the operating area.

In some instances, after performing block 435, the method 400 may proceed back to block 405 to repeat the method 400. Accordingly, the first electronic processor 205 may repeatedly perform the method 400 to repeatedly evaluate whether objects are present in the detection area 605 as well as repeatedly determine locations and/or distances of detected objects with respect to the robotic mower 105 to repeatedly adjust the travel speed and/or forward/reverse direction of the robotic mower 105 based on object detection data from the object detection sensor 250.

As indicated in FIG. 4B, in some instances, the method 400 may include additional steps 440, 445, and 450. In some instances, in response to determining that the closest distance is less than the first distance threshold (at block 425), at block 440, the first electronic processor 205 may determine whether the closest distance to the closest object is greater than or equal to a second distance threshold (e.g., distance S2) that is lower than the first distance threshold. For example, the first distance threshold may be 60 centimeters and the second distance threshold may be 30 centimeters.

At block 445, in response to determining that the closest distance to the closest object is less than the first distance threshold and greater than or equal to the second distance threshold, the first electronic processor 205 may control the at least one wheel motor 235 to move the robotic mower 105 forward at a second speed proportionate to the closest distance between the robotic mower 105 and the closest object in a similar manner as described above with respect to block 435.

On the other hand, in response to determining that the closest distance to the closest object is less than the second distance threshold, at block 450, the first electronic processor 205 may control the at least one wheel motor 235 to move the robotic mower 105 backward at a third speed inversely proportionate to the closest distance between the robotic mower 105 and the closest object. In some instances, to adjust the third speed (i.e., a reverse/backward speed) inversely proportionately to the closest distance between the robotic mower 105 and the closest object, the first electronic processor 205 associates a second minimum speed (e.g., 1 centimeters per second) of a third speed range with a distance of the second distance threshold (e.g., 30 centimeters) and associates a second maximum speed (e.g., 3 centimeter per second) of the third speed range with another distance (e.g., 10 centimeters). Accordingly, in the above example, when the closest distance to the closest object is determined to be 30 centimeters, the robotic mower 105 travels backward at a speed of 1 centimeters per second, and when the closest distance to the closest object is determined to be 10 centimeters (or less), the robotic mower 105 travels backward at a speed of 3 centimeter per second to attempt to more quickly move away from a closer object. Values in between the above-noted speed and distances also proportionately correspond to each other. For example, when the closest distance to the closest object is determined to be 20 centimeters, the robotic mower 105 travels backward at a speed of 2 centimeter per second. As indicated by the above examples, the robotic mower 105 may move in reverse at decreased speeds as the robotic mower 105 gets further away from the closest detected object and may move in reverse at increased speeds when the robotic mower 105 is very close to the closest detected object.

After performing block 445 or 450 to control the travel speed and forward/reverse direction of the robotic mower 105, the method 400 proceeds back to block 405 to repeatedly evaluate whether objects are present in the detection area 605 as well as repeatedly determine locations and/or distances of detected objects with respect to the robotic mower 105 to repeatedly adjust the travel speed and/or forward/reverse direction of the robotic mower 105 based on object detection data from the object detection sensor 250.

In some instances, absolute values of the third speed range from which the third speed is determined (at block 450) may be the same as or different than the absolute values of the second speed range from which the second speed is determined (at blocks 435 and/or 445). For example, a maximum forward speed of the robotic mower 105 in the second speed range may be 90% of the first speed (i.e., full/normal speed), and a maximum reverse speed of the robotic mower 105 in the third speed range may also be 90% of the first speed. The second speed range and the third speed range may be of the same size or different sizes. The distance ranges corresponding to each speed range may also be the same size as each other or different sizes from each other.

Table 1 below illustrates closest distances to a closest object and associated travel speeds and forward/reverse direction of the robotic mower 105 according to one example implementation. The values of the distances S1 and S2 in Table 1 and the relationships between the values of the distances S1 and S2 are merely example values and may be different values in other situations. For example, S2 is not necessarily half of S1 in some implementations.

| Closest Distance (S) | Travel Speed/Direction | Summary |
|---|---|---|
| S ≥ S1 (e.g., S1 is 60 centimeters (cm), 40 cm, 80 cm, or the like) | Forward at first speed (full speed) | No objects are detected in the detection area 605 or the closest detected object is greater than or equal to distance S1 away. |
| S2 ≤ S < S1 (e.g., S2 is 30 cm, 20 cm, 40 cm, or the like) | Forward at a speed proportionate to S | At least one object detected in the detection area 605, and the closest detected object is between distance S1 and distance S2 away. Robotic mower 105 moves (i) slower in a forward direction as the robotic mower 105 gets closer to the closest object and (ii) faster in a forward direction as the robotic mower 105 gets further from the closest object. |
| 0 cm < S < S2 | Backward at a speed proportionate to S | At least one object detected in the detection area 605, and the closest detected object is 0 cm to distance S2 away. Robotic mower 105 moves (i) slower in a reverse direction as the robotic mower 105 gets further from the closest object and (ii) faster in a reverse direction as the robotic mower 105 gets closer to the closest object. Robotic mower 105 may disable cutting blade motor 240 and/or other cutting motors in some implementations. |

In some instances, the distance thresholds may include buffer values to allow for smooth operation of the robotic mower 105 that reduces the amount of transitions between different operating states (e.g., the three states of operation shown in Table 1 that include travel speed and direction of the robotic mower 105 for different distance ranges with respect to the closest object to the robotic mower 105). For example, instead of transitioning from forward movement to reverse movement and vice versa at the same example threshold distance of 30 centimeters, a buffer value of five centimeters (or ten centimeters or the like) may be used when transitioning between operating states that involve a change to the forward/reverse direction of movement of the robotic mower 105. For example, when the robotic mower 105 is moving forward at a speed proportionate to the closest distance to the closest object, the robotic mower 105 may stop and begin reverse movement backwards in response to determining that the closest distance to the closest object is 25 centimeters (i.e., the 30 cm threshold minus 5 cm of buffer value). When the robotic mower 105 is moving backwards at a speed proportionate to the closest distance to the closest object, the robotic mower 105 may stop and begin forward movement in response to determining that the closest distance to the closest object is 35 centimeters (i.e., the 30 cm threshold plus 5 cm of buffer value). Using such example buffer values around the 30 centimeter distance threshold may prevent that robotic mower 105 from changing operating states too often and/or getting stuck in an undesirable position. The range of buffer values may be referred to as a buffer range. In the buffer range, the robotic mower 105 may be configured to operate a constant speed (e.g., a preprogrammed constant speed that is the same or different than the speed at which the robotic mower 105 was traveling before entering the buffer range). Alternatively, in the buffer range, the robotic mower 105 may continue to adjust its travel speed proportionately to the closest distance to the closest object as explained previously herein.

As mentioned previously herein, FIG. 5 illustrates a flowchart of the method 500 of a steering control algorithm that may be performed by the first electronic processor 205 of the robotic mower 105 to control when and how the robotic mower 105 turns when objects are detected by the robotic mower 105 according to some example embodiments.

At block 505, the first electronic processor 205 receives object detection data from the object detection sensor 250 (e.g., a millimeter wave radar device 250). As explained previously herein, the object detection data may indicate a respective position of each of one or more objects/obstacles with respect to the robotic mower 105. In some instances, the block 505 of FIG. 5 is identical or similar to the block 405 of FIG. 4, and the same explanation included previously herein with respect to block 405 applies block 505.

At block 510, the first electronic processor 205 begins to execute a steering control algorithm. In some instances, blocks 510 through 525 are considered to be a steering control algorithm to control when and how the robotic mower 105 turns (e.g., when one or more objects are detected by the object detection sensor 250). In some instances, block 505 may also be considered to be part of the steering control algorithm. At block 510, the first electronic processor 205 determines, based on the object detection data received from the object detection sensor 250 (at block 505), whether any objects are present within the detection area 605 of the object detection sensor 250. In some instances, the block 510 of FIG. 5 is identical or similar to the block 410 of FIG. 4, and the same explanation included previously herein with respect to block 410 applies block 510.

At block 515, the first electronic processor 205 controls the at least one wheel motor 235 to move the robotic mower 105 in a first straight line forward in response to determining that the object detection data indicates an absence of any objects in the detection area 605. In other words, when there are not any objects detected in the detection area 605, the robotic mower 105 is configured to move forward in a straight line until (i) an object is detected, (ii) it is determined that a virtual boundary has been reached, and/or (iii) the bump sensor indicates that the robotic mower 105 has bumped into an object. In some instances, when the robotic mower 105 is moving in a straight line forward, the robotic mower 105 may be considered to be operating in a first operating state (i.e., a "straight line forward" operating state). After performing block 515 to control the robotic mower 105 to move forward in a straight line, the method 500 proceeds back to block 505 to repeatedly evaluate whether objects are present in the detection area 605 as well as repeatedly determine locations and/or distances of detected objects with respect to the robotic mower 105 to repeatedly adjust the turning behavior of the robotic mower 105 based on object detection data from the object detection sensor 250.

While operating in the "straight line forward" operating state and repeatedly executing the method 500, the first electronic processor 205 may determine that the object detection data indicates that at least one object is present within the detection area 605. In response to determining that the object detection data indicates that the at least one object is present within the detection area 605, at block 520, the first electronic processor 205 determines whether a left portion 635A or a right portion 635B of the detection area 605 includes (i) more objects, (ii) more data points representative of objects, or (iii) both (i) and (ii). For example, as shown in FIG. 6, the detection area 605 may be divided by the center axis 610 into the left portion 635A and the right portion 635B. In some instances, the portions 635A and 635B are equal in size or may be different sizes. As shown in the example of FIG. 6, the left portion 635A includes two objects 620 and 625 while the right portion 635A includes one object 630.

At block 525, the first electronic processor 205 controls the at least one wheel motor 235 to turn the robotic mower 105 in a direction away from a portion of the detection area 605 that includes (i) more objects, (ii) more data points representative of objects (which indicates the size of respective objects), or (iii) both (i) and (ii). Again referencing the example shown in FIG. 6, because the left portion 635A of the detection area 605 includes more objects than the right portion 635B of the detection area 605, the first electronic processor 205 may control the robotic mower 105 to turn rightward away from the left portion 635A of the detection area 605, for example, as shown by potential turning paths 640A and 640B shown in FIG. 6. In some instances, when the robotic mower 105 is turning while moving forward, the robotic mower 105 may be considered to be operating in a second operating state (i.e., a "turning" operating state). In the example of FIG. 6, the robotic mower 105 turns away from the portion of the detection area 605 that includes more objects. However, the direction in which the first electronic processor 205 controls the robotic mower 105 to turn may be additionally or alternatively based on a size of the obstacles 620, 625, 630. For example, a size of each obstacle may be determined based on a number of detected data points that represent each obstacle 620, 625, 630 as explained previously herein. The first electronic processor 205 may determine a summed overall size of the obstacles that are located in one portion of the detection area 605 compared to a summed overall size of the obstacles that are located in the other portion of the detection area 605 based on the number/amount of data points that represent each obstacle. For example, the object 630 may be a large obstacle that is represented by more clustered data points than the combination of both objects 620 and 625. In some instances, the first electronic processor 205 may control the robotic mower 105 to turn leftward away from the right portion 635A of the detection area 605 in response to determining that the right portion 635A of the detection area 605 includes more data points that are representative of one or more objects than the left portion 635A of the detection area 605 (even though the left portion 635A of the detection area 605 includes more objects).

In some instances, the first electronic processor 205 is configured to determine, based on the object detection data, a farthest x-coordinate distance of a farthest x-coordinate object from the center axis 610 that runs through a center of the robotic mower 105 in a direction parallel to a forward path of movement of the robotic mower 105. In some instances, the first electronic processor 205 is configured to determine the farthest x-coordinate distance of the farthest x-coordinate object from the center axis 610 from among one or more first objects that are located on a portion 635 of the detection area 605 in a direction in which the robotic mower 105 is configured to turn (e.g., a portion 635 of the detection area 605 that includes less objects or less data points representative of objects). With reference to FIG. 6, the portion of the detection area 605 that includes less objects is the right portion 635B. Accordingly, because the robotic mower 105 may be configured to turn toward the right portion 635B as explained above, the first electronic processor 205 may determine the farthest x-coordinate distance of the farthest x-coordinate object from the center axis 610 from among the objects that are located in the right portion 635B of the detection area 605. In the example shown in FIG. 6, there is only one object 630 in the right portion 635B of the detection area 605. Accordingly, the x-coordinate distance of the object 630 from the center axis 610 is determined by the first electronic processor 205. However, if in other situations the right portion 635B included another object that had an x-coordinate distance farther from the center axis 610 than that of the object 630 (and within the detection area 605), the first electronic processor 205 would determine the x-coordinate distance of the another object and would determine that the another object has the farthest x-coordinate distance. In some instances, the farthest x-coordinate object may change as the robotic mower 105 continues to move in a similar manner as described above with respect to the closest object to the robotic mower 105.

In some instances, the first electronic processor 205 is configured to determine, based on the object detection data, a closest x-coordinate distance of a closest x-coordinate object from the center axis 610 that runs through a center of the robotic mower 105 in a direction parallel to a forward path of movement of the robotic mower 105. In some instances, the first electronic processor 205 is configured to determine, based on the object detection data, a closest or farthest x-coordinate distance from the center axis 610 of a closest object (e.g., a closest y-coordinate object) from the robotic mower 105. In some instances, determination of the closest or farthest x-coordinate distances mentioned above may be limited to objects that are detected on the portion 635 of the detection area 605 toward which the first electronic processor 205 is controlling the robotic mower 105 to turn. In other instances, determination of the closest or farthest x-coordinate distances mentioned above are determined with respect to all detected objects regardless of which portion 635 of the detection area 605 each object is located.

In some instances, the first electronic processor 205 is configured to control the at least one wheel motor 235 to turn the robotic mower 105 according to a turning angle based on one or more of the farthest x-coordinate distance, the closest x-coordinate distance, the closest y-coordinate distance, and/or the like. For example, the first electronic processor 205 is configured to control the at least one wheel motor 235 to turn the robotic mower 105 according to a turning angle that is a function of the farthest x-coordinate distance of the farthest x-coordinate object. In some instances, the function indicates that the turning angle of the robotic mower 105 with respect to the center line 610 increases (i.e., gets sharper) as the farthest x-coordinate distance of the farthest x-coordinate object increases. In other words, the turning angle of the robotic mower 105 may increase in sharpness as the farthest x-coordinate distance of the farthest x-coordinate object increases and may decrease in sharpness as the farthest x-coordinate distance of the farthest x-coordinate object decreases. For example, the robotic mower 105 may move along potential turning path 640B when the object 630 is located in a position shown in FIG. 6. However, if the object 630 were located in a position closer to the center axis 610 (i.e., a lesser farthest x-coordinate distance), the robotic mower 105 may move along potential turning path 640A such that the turning angle of the robotic mower 105 is not as sharp as the turning angle for the potential turning path 640B. Conversely, in some instances, the turning angle of the robotic mower 105 may decrease in sharpness as the farthest x-coordinate distance of the farthest x-coordinate object increases.

In some instances, the turning angle of the robotic mower 105 is proportionate (or inversely proportionate) to the farthest x-coordinate distance of the farthest x-coordinate object or of another object (e.g., the closest y-coordinate object). In some instances, a turning angle range from which the turning angle is determined by the first electronic processor 205 includes a minimum turning angle (e.g., 10 degrees, 20 degrees, or the like) and a maximum turning angle (e.g., 40 degrees, 45 degrees or the like). In some instances, the maximum turning angle is approximately equal to half of the detection angle 607 of the object detection sensor 250. In some instances, to adjust the turning angle proportionately to the farthest x-coordinate distance of the farthest x-coordinate object, the first electronic processor 205 associates the maximum turning angle (e.g., 45 degrees) of the turning angle range with a first distance of the farthest x-coordinate distance (e.g., 15 centimeters from the center axis 610, which may correspond to half of a width along the x-axis of the detection area 605) and associates the minimum turning angle (e.g., 15 degrees) of the turning angle range with a second distance of the farthest x-coordinate distance (e.g., 0 centimeters). Accordingly, in the above example, when the farthest x-coordinate distance to the farthest x-coordinate object is determined to be 15 centimeters (i.e., an example maximum x-coordinate distance), the robotic mower 105 turns at a turning angle of 45 degrees (i.e., an example maximum turning angle). Conversely, when the farthest x-coordinate distance to the farthest x-coordinate object is determined to be 0 centimeters (i.e., an example minimum x-coordinate distance), the robotic mower 105 turns at a turning angle of 15 degrees (i.e., an example minimum turning angle). Values in between the above-noted turning angles and farthest x-coordinate distances also proportionately correspond to each other. For example, when the farthest x-coordinate distance to the farthest x-coordinate object is determined to be 10 centimeters, the robotic mower 105 may turn at a turning angle of 35 degrees.

In some instances, the first electronic processor 205 is configured to determine, based on the object detection data, a closest x-coordinate distance of a closest x-coordinate object or of another object (e.g., the closest y-coordinate object) from the center axis 610 that runs through a center of the robotic mower 105 in a direction parallel to a forward path of movement of the robotic mower 105. In some instances, the first electronic processor 205 is configured to determine the closest x-coordinate distance of the closest x-coordinate object from the center axis 610 from among one or more first objects that are located on a portion of the detection area 605 toward which the robotic mower 105 is configured to turn (e.g., the right portion 635B in the example shown in FIG. 6). In the example shown in FIG. 6, there is only one object 630 in the right portion 635B of the detection area 605. Accordingly, the x-coordinate distance of the object 630 from the center axis 610 is determined by the first electronic processor 205. However, if in other situations the right portion 635B included another object that had an x-coordinate distance closer to the center axis 610 than that of the object 630, the first electronic processor 205 would determine the x-coordinate distance of the another object and would determine that the another object has the closest x-coordinate distance. In some instances, the closest x-coordinate object may change as the robotic mower 105 continues to move in a similar manner as described above with respect to the closest object to the robotic mower 105.

In some instances, the first electronic processor 205 is configured to control the at least one wheel motor 235 to turn the robotic mower 105 according to a turning angle that is a function of the closest x-coordinate distance of the closest x-coordinate object or of another object (e.g., the closest y-coordinate object). In some instances, the function indicates that the turning angle increases as the closest x-coordinate distance of the closest x-coordinate object decreases. In other words, the turning angle of the robotic mower 105 may increase in sharpness as the closest x-coordinate distance of the closest x-coordinate object decreases and may decrease in sharpness as the closest x-coordinate distance of the closest x-coordinate object increases. For example, the robotic mower 105 may turn less sharply as the closest x-coordinate distance increases because the robotic mower 105 is successfully moving away from the closest x-coordinate object. Conversely, in some instances, the turning angle of the robotic mower 105 may increase in sharpness as the closest x-coordinate distance of the closest x-coordinate object increases and may decrease in sharpness as the closest x-coordinate distance of the closest x-coordinate object decreases. In some instances, the turning angle of the robotic mower 105 is proportionate (or inversely proportionate) to the closest x-coordinate distance of the closest x-coordinate object in a similar manner as described above with respect to the farthest x-coordinate distance of the farthest x-coordinate object.

In some instances, after performing block 525 to control the robotic mower 105 to turn in a direction away from the portion 635A of the detection area 605 that includes (i) more objects, (ii) more data points representative of objects, or (iii) both (i) and (ii), the method 500 proceeds back to block 505 to repeatedly evaluate whether objects are present in the detection area 605 as well as repeatedly determine locations and/or distances of detected objects with respect to the robotic mower 105 to repeatedly adjust the turning behavior of the robotic mower 105 based on object detection data from the object detection sensor 250. Accordingly, by repeating the method 500, the first electronic processor 205 may also determine when to complete a turn and continue traveling in a straight line again. For example, the first electronic processor 205 is configured to, after controlling the at least one wheel motor 235 to turn the robotic mower 105, control the at least one wheel motor 235 to complete a turn and travel in a second straight line forward in response to determining that the object detection data indicates the absence of any objects in the detection area 605. In other words, the robotic mower 105 may continue turning while moving forward until the first electronic processor 205 determines that the detection area 605 does not include any objects at which point the robotic mower 105 may again begin traveling in a straight line (i.e., enter the "straight line forward" operating state).

As noted previously herein, while FIG. 6 shows the millimeter wave radar sensor 250 located at the front edge 1005 of the robotic mower 105, in some embodiments, the millimeter wave radar device 250 may be located at a first predetermined distance 1010 set back from the front edge 1005 of the robotic mower 105 as explained below (e.g., see FIG. 10). In such embodiments, the values described above with respect to FIG. 6 that relate to the axis 615 that is perpendicular to the center axis 610 and that runs along a front surface of the millimeter wave radar sensor 250 may be appropriately adjusted by the electronic processor 205 to account for the millimeter wave radar sensor 250 being set back from the front edge 1005 of the robotic mower 105. For example, because the first predetermined distance 1010 (d) that the millimeter wave radar sensor 250 is set back from the front edge 1005 of the robotic mower 105 is known, the electronic processor 205 may take this first predetermined distance 1010 (d) into account when determining the location of a detected object (e.g., the x0coordinate, y-coordinate, overall location, etc.).

At any point during operation (e.g., during the "straight line forward" operating state, during the "turning" operating state, during a "reverse/backward movement" operating state, and/or the like), the first electronic processor 205 may enter a "bump control" state in response to determining that the robotic mower 105 has bumped into an object based on data received from one or more bump sensors. The "bump control" state may interrupt the methods 400 and/or 500 to control the movement of the robotic mower 105 in a predefined manner as described previously herein (e.g., adjust one or more of the travel speed of the robotic mower 105, a forward/reverse direction of the robotic mower 105, a turning behavior of the robotic mower 105, and/or the like). In some instances, in the "bump control" state, the travel speed of the robotic mower 105 may still be controlled in accordance with the method 400 of FIG. 4. After the predefined manner of operation of the "bump control" state has been executed by the robotic mower 105, the robotic mower 105 may continue executing the methods 400 and/or 500 to control movement of the robotic mower 105.

The values of the distances, speeds, turning angles, associated ranges, etc. described in the examples herein are merely example values and may be pre-programmed to be different values in other situations. In some instances, any one or a combination of the above-noted values may be user-programmable and user-adjustable, for example, by using the external device 115 to select desired values and transmitting the desired values to the robotic mower 105 (e.g., via wireless communication) as described previously herein.

The embodiments described above and illustrated in the figures are presented by way of example only and are not intended as a limitation upon the concepts and principles of the present invention. As such, it will be appreciated that various changes in the elements and their configuration and arrangement are possible without departing from the spirit and scope of the present invention.

The following exemplary numbered embodiments are described herein:

1. A robotic garden tool comprising:

a housing;

a set of wheels coupled to the housing and configured to rotate to propel the robotic garden tool on an operating surface;

at least one wheel motor coupled to one or more wheels of the set of wheels, the at least one wheel motor configured to drive rotation of the one or more wheels;

an object detection sensor configured to detect one or more objects; and

an electronic processor in communication with the object detection sensor and configured to control the at least one wheel motor to move the robotic garden tool on the operating surface by

receiving object detection data from the object detection sensor, wherein the object detection data indicates a respective position of each of the one or more objects with respect to the robotic garden tool, and

executing a speed control algorithm that includes

determining, based on the object detection data, whether any objects are present within a detection area of the object detection sensor,

in response to determining that the object detection data indicates an absence of any objects within the detection area, controlling the at least one wheel motor to move the robotic garden tool forward at a first speed,

in response to determining that the object detection data indicates that at least one object is present within the detection area, determining a closest distance of a closest object to the robotic garden tool based on the object detection data,

determining whether the closest distance between the closest object and the robotic garden tool is greater than or equal to a first distance threshold,

in response to determining that the closest distance is greater than or equal to the first distance threshold, controlling the at least one wheel motor to move the robotic garden tool forward at the first speed,

in response to determining that the closest distance is less than the first distance threshold, determining whether the closest distance is greater than or equal to a second distance threshold that is lower than the first distance threshold,

in response to determining that the closest distance is less than the first distance threshold and greater than or equal to the second distance threshold, controlling the at least one wheel motor to move the robotic garden tool forward at a second speed proportionate to the closest distance between the robotic garden tool and the closest object, wherein the second speed is less than the first speed, and

in response to determining that the closest distance is less than the second distance threshold, controlling the at least one wheel motor to move the robotic garden tool backward at a third speed inversely proportionate to the closest distance between the robotic garden tool and the closest object.

2. The robotic garden tool of embodiment 1, wherein the electronic processor is configured to execute a steering control algorithm that includes:

controlling the at least one wheel motor to move the robotic garden tool in a first straight line forward in response to determining that the object detection data indicates the absence of any objects;

in response to determining that the object detection data indicates that the at least one object is present within the detection area, determining whether a left portion or a right portion of the detection area includes more objects; and

controlling the at least one wheel motor to turn the robotic garden tool in a direction away from a portion of the detection area that includes (i) more objects, (ii) more data points representative of objects, or (iii) both (i) and (ii).

3. The robotic garden tool of embodiment 2, wherein the electronic processor is configured to:

determine, based on the object detection data, a farthest x-coordinate distance of a farthest x-coordinate object from a center axis that runs through a center of the robotic garden tool in a direction parallel to a forward path of movement of the robotic garden tool; and

control the at least one wheel motor to turn the robotic garden tool according to a turning angle that is a function of the farthest x-coordinate distance of the farthest x-coordinate object;

and optionally

wherein the function indicates that the turning angle increases as the farthest x-coordinate distance of the farthest x-coordinate object increases;

and optionally

wherein the electronic processor is configured to determine the farthest x-coordinate distance of the farthest x-coordinate object from the center axis from among one or more first objects that are located on a portion of the detection area that includes less objects.

4. The robotic garden tool of embodiment 2, wherein the electronic processor is configured to:

determine, based on the object detection data, a closest x-coordinate distance of a closest x-coordinate object from a center axis that runs through a center of the robotic garden tool in a direction parallel to a forward path of movement of the robotic garden tool; and

control the at least one wheel motor to turn the robotic garden tool according to a turning angle that is a function of the closest x-coordinate distance of the closest x-coordinate object;

and optionally

wherein the function indicates that the turning angle increases as the closest x-coordinate distance of the closest x-coordinate object increases;

and optionally

wherein the electronic processor is configured to determine the closest x-coordinate distance of the closest x-coordinate object from the center axis from among one or more first objects that are located on a portion of the detection area that includes less objects.

5. The robotic garden tool of embodiment 2, wherein the electronic processor is configured to, after controlling the at least one wheel motor to turn the robotic garden tool, control the at least one wheel motor to complete a turn and travel in a second straight line forward in response to determining that the object detection data indicates the absence of any objects.

6. The robotic garden tool of embodiment 1, wherein the robotic garden tool includes a bump sensor configured to sense when the housing bumps into an object; and
wherein the electronic processor is coupled to the bump sensor and is configured to

determine that the housing has bumped the object based on bump sensor data from the bump sensor, and
control the at least one wheel motor to move the robotic garden tool in a second direction opposite to a first direction in which the robotic garden tool was moving when the electronic processor determined that the housing bumped the object.

7. The robotic garden tool of embodiment 1, wherein the object detection sensor includes a millimeter wave radar device.

8. The robotic garden tool of embodiment 1, wherein the first distance threshold is approximately equal to a maximum detectable range of the object detection sensor.

9. A method of controlling a robotic garden tool, the method comprising:

receiving, with an electronic processor of the robotic garden tool, object detection data from an object detection sensor of the robotic garden tool, wherein the object detection data indicates a respective position of each of one or more objects with respect to the robotic garden tool; and
executing, with the electronic processor of the robotic garden tool, a speed control algorithm that includes determining, with the electronic processor and based on the object detection data, whether any objects are present within a detection area of the object detection sensor,
in response to determining that the object detection data indicates an absence of any objects in the detection area, controlling at least one wheel motor to move the robotic garden tool forward at a first speed, the at least one wheel motor being coupled to one or more wheels of a set of wheels coupled to a housing of the robotic garden tool and configured to rotate to propel the robotic garden tool on an operating surface, the at least one wheel motor configured to drive rotation of the one or more wheels,

in response to determining that the object detection data indicates that at least one object is present within the detection area, determining, with the electronic processor, a closest distance of a closest object to the robotic garden tool based on the object detection data,

determining whether the closest distance between the closest object and the robotic garden tool is greater than or equal to a first distance threshold,

in response to determining that the closest distance is greater than or equal to the first distance threshold, controlling the at least one wheel motor to move the robotic garden tool forward at the first speed, and

in response to determining that the closest distance is less than the first distance threshold, controlling the at least one wheel motor to move the robotic garden tool forward at a second speed proportionate to the closest distance between the robotic garden tool and the closest object, wherein the second speed is less than the first speed.

10. The method of embodiment 9, wherein executing the speed algorithm further includes:

in response to determining that the closest distance is less than the first distance threshold, determining, with the electronic processor, whether the closest distance is greater than or equal to a second distance threshold that is lower than the first distance threshold;

in response to determining that the closest distance is less than the first distance threshold and greater than or equal to the second distance threshold, controlling, with the electronic processor, the at least one wheel motor to move the robotic garden tool forward at the second speed proportionate to the closest distance between the robotic garden tool and the closest object, and

in response to determining that the closest distance is less than the second distance threshold, controlling the at least one wheel motor to move the robotic garden tool backward at a third speed inversely proportionate to the closest distance between the robotic garden tool and the closest object.

11. The method of embodiment 9, further comprising executing, with the electronic processor, a steering control algorithm that includes:

controlling the at least one wheel motor to move the robotic garden tool in a first straight line forward in response to determining that the object detection data indicates the absence of any objects;

in response to determining that the object detection data indicates that the at least one object is present within the detection area, determining whether a left portion or a right portion of the detection area includes more objects; and

controlling the at least one wheel motor to turn the robotic garden tool in a direction away from a portion of the detection area that includes (i) more objects, (ii) more data points representative of objects, or (iii) both (i) and (ii); and optionally

wherein executing the steering control algorithm further includes, after controlling the at least one wheel motor to turn the robotic garden tool, controlling the at least one wheel motor to complete a turn and travel in a second straight line forward in response to determining that the object detection data indicates the absence of any objects.

12. The method of embodiment 9, wherein the first distance threshold is approximately equal to a maximum detectable range of the object detection sensor.

13. A robotic garden tool comprising:

a housing;

a set of wheels coupled to the housing and configured to rotate to propel the robotic garden tool on an operating surface;

at least one wheel motor coupled to one or more wheels of the set of wheels, the at least one wheel motor configured to drive rotation of the one or more wheels;

an object detection sensor configured to detect one or more objects; and

an electronic processor in communication with the object detection sensor and configured to control the at least one wheel motor to move the robotic garden tool on the operating surface by

receiving object detection data from the object detection sensor, wherein the object detection data indicates a respective position of each of the one or more objects with respect to the robotic garden tool, and

executing a steering control algorithm that includes
determining, with the electronic processor and based on the object detection data, whether any objects are present within a detection area of the object detection sensor,
controlling the at least one wheel motor to move the robotic garden tool in a first straight line forward in response to determining that the object detection data indicates an absence of any objects in the detection area,
determining that the object detection data indicates that at least one object is present within the detection area,
in response to determining that the object detection data indicates that the at least one object is present within the detection area, determining whether a left portion or a right portion of the detection area includes more objects, and
controlling the at least one wheel motor to turn the robotic garden tool in a direction away from a portion of the detection area that includes (i) more objects, (ii) more data points representative of objects, or (iii) both (i) and (ii).

14. The robotic garden tool of embodiment 13, wherein the electronic processor is configured to:

determine, based on the object detection data, a farthest x-coordinate distance of a farthest x-coordinate object from a center axis that runs through a center of the robotic garden tool in a direction parallel to a forward path of movement of the robotic garden tool; and
control the at least one wheel motor to turn the robotic garden tool according to a turning angle that is a function of the farthest x-coordinate distance of the farthest x-coordinate object.

15. The robotic garden tool of embodiment 14, wherein the electronic processor is configured to, after controlling the at least one wheel motor to turn the robotic garden tool, control the at least one wheel motor to complete a turn and travel in a second straight line forward in response to determining that the object detection data indicates the absence of any objects.

## Claims

1. A robotic garden tool comprising:

a housing;
a set of wheels coupled to the housing and configured to rotate to propel the robotic garden tool on an operating surface;
at least one wheel motor coupled to one or more wheels of the set of wheels, the at least one wheel motor configured to drive rotation of the one or more wheels;
an object detection sensor configured to detect one or more objects; and
an electronic processor in communication with the object detection sensor and configured to control the at least one wheel motor to move the robotic garden tool on the operating surface by

receiving object detection data from the object detection sensor, wherein the object detection data indicates a respective position of each of the one or more objects with respect to the robotic garden tool, and
executing a steering control algorithm that includes

determining, with the electronic processor and based on the object detection data, whether any objects are present within a detection area of the object detection sensor,
controlling the at least one wheel motor to move the robotic garden tool in a first straight line forward in response to determining that the object detection data indicates an absence of any objects in the detection area,
determining that the object detection data indicates that at least one object is present within the detection area,
in response to determining that the object detection data indicates that the at least one object is present within the detection area, determining whether a left portion or a right portion of the detection area includes more objects, and
controlling the at least one wheel motor to turn the robotic garden tool in a direction away from a portion of the detection area that includes (i) more objects, (ii) more data points representative of objects, or (iii) both (i) and (ii).

2. The robotic garden tool of claim 1, wherein the electronic processor is configured to:

determine, based on the object detection data, a farthest x-coordinate distance of a farthest x-coordinate object from a center axis that runs through a center of the robotic garden tool in a direction parallel to a forward path of movement of the robotic garden tool; and

control the at least one wheel motor to turn the robotic garden tool according to a turning angle that is a function of the farthest x-coordinate distance of the farthest x-coordinate object.

3. The robotic garden tool of claim 2, wherein the function indicates that the turning angle increases as the farthest x-coordinate distance of the farthest x-coordinate object increases.

4. The robotic garden tool of claim 3, wherein the electronic processor is configured to determine the farthest x-coordinate distance of the farthest x-coordinate object from the center axis from among one or more first objects that are located on a portion of the detection area that includes less objects.

5. The robotic garden tool of any of claims 2-4, wherein the turning angle of the robotic mower is proportionate or inversely proportionate to the farthest x-coordinate distance of the farthest x-coordinate object.

6. The robotic garden tool of any of the preceding claims, wherein the electronic processor is configured to:

determine, based on the object detection data, a closest x-coordinate distance of a closest x-coordinate object from a center axis that runs through a center of the robotic garden tool in a direction parallel to a forward path of movement of the robotic garden tool; and

control the at least one wheel motor to turn the robotic garden tool according to a turning angle that is a function of the closest x-coordinate distance of the closest x-coordinate object.

7. The robotic garden tool of claim 6, wherein the function indicates that the turning angle increases as the closest x-coordinate distance of the closest x-coordinate object increases.

8. The robotic garden tool of claim 7, wherein the electronic processor is configured to determine the closest x-coordinate distance of the closest x-coordinate object from the center axis from among one or more first objects that are located on a portion of the detection area that includes less objects.

9. The robotic garden tool of claim 6-8, wherein the turning angle of the robotic mower is proportionate or inversely proportionate to the closest x-coordinate distance of the closest x-coordinate object.

10. The robotic garden tool of any of the preceding claims, wherein the electronic processor is configured to, after controlling the at least one wheel motor to turn the robotic garden tool, control the at least one wheel motor to complete a turn and travel in a second straight line forward in response to determining that the object detection data indicates the absence of any objects.

11. The robotic garden tool of any of the preceding claims, wherein the robotic garden tool includes a bump sensor configured to sense when the housing bumps into an object; and

wherein the electronic processor is coupled to the bump sensor and is configured to determine that the housing has bumped the object based on bump sensor data from the bump sensor, and

control the at least one wheel motor to move the robotic garden tool in a second direction opposite to a first direction in which the robotic garden tool was moving when the electronic processor determined that the housing bumped the object.

12. The robotic garden tool of any of the preceding claims, wherein the object detection sensor includes a millimeter wave radar sensor.

13. The robotic garden tool of claim 12, further comprising a transducer configured to generate first vibrations at a predetermined frequency, particularly wherein the first vibrations may be applied to the millimeter wave radar sensor.

14. The robotic garden tool of any of the preceding claims, wherein the robotic garden tool is a robotic lawn mower.

15. A method of controlling a robotic garden tool, the method comprising:

receiving, with an electronic processor of the robotic garden tool, object detection data from an object detection sensor of the robotic garden tool, wherein the object detection data indicates a respective position of each of the one or more objects with respect to the robotic garden tool, and

executing, with the electronic processor of the robotic garden tool, a steering control algorithm that includes

determining, with the electronic processor and based on the object detection data, whether any objects are present within a detection area of the object detection sensor,

controlling the at least one wheel motor to move the robotic garden tool in a first straight line forward in response to determining that the object detection data indicates an absence of any objects in the detection area, the at least one wheel motor being coupled to one or more wheels of a set of wheels coupled to a housing of the robotic garden tool and configured to rotate to propel the robotic garden tool on an operating surface, the at least one wheel motor configured to drive rotation of the one or more wheels,

determining, with the electronic processor and based on the object detection data, that the object detection data indicates that at least one object is present within the detection area,

in response to determining that the object detection data indicates that the at least one object is present within the detection area, determining whether a left portion or a right portion of the detection area includes more objects, and

controlling the at least one wheel motor to turn the robotic garden tool in a direction away from a portion of the detection area that includes (i) more objects, (ii) more data points representative of objects, or (iii) both (i) and (ii).

FIG. 1A

EP 4 700 521 A2

FIG. 1B

FIG. 2

EXTERNAL DEVICE 115

325 — SECOND DISPLAY

305

320 — SECOND INPUT DEVICE

SECOND ELECTRONIC PROCESSOR

310 — SECOND MEMORY

315 — SECOND NETWORK INTERFACE

*FIG. 3*

400

405

RECEIVING, WITH AN ELECTRONIC PROCESSOR OF THE ROBOTIC GARDEN TOOL, OBJECT DETECTION DATA FROM AN OBJECT DETECTION SENSOR OF THE ROBOTIC GARDEN TOOL, WHEREIN THE OBJECT DETECTION DATA INDICATES A RESPECTIVE POSITION OF EACH OF ONE OR MORE OBJECTS WITH RESPECT TO THE ROBOTIC GARDEN TOOL

410

BASED ON THE OBJECT DETECTION DATA, ARE THERE ANY OBJECTS PRESENT WITHIN A DETECTION AREA OF THE OBJECTION DETECTION SENSOR?

NO

420

YES

415

IN RESPONSE TO DETERMINING THAT THE OBJECT DETECTION DATA INDICATES AN ABSENCE OF ANY OBJECTS IN THE DETECTION AREA, CONTROLLING AT LEAST ONE WHEEL MOTOR TO MOVE THE ROBOTIC GARDEN TOOL FORWARD AT A FIRST SPEED

IN RESPONSE TO DETERMINING THAT THE OBJECT DETECTION DATA INDICATES THAT AT LEAST ONE OBJECT IS PRESENT WITHIN THE DETECTION AREA, DETERMINING, WITH THE ELECTRONIC PROCESSOR, A CLOSEST DISTANCE OF A CLOSEST OBJECT TO THE ROBOTIC GARDEN TOOL BASED ON THE OBJECT DETECTION DATA

TO BLOCK 425 OF FIG. 4B

*FIG. 4A*

FIG. 4B

IS THE CLOSEST DISTANCE BETWEEN THE CLOSEST OBJECT AND THE ROBOTIC GARDEN TOOL GREATER THAN OR EQUAL TO A FIRST DISTANCE THRESHOLD?

NO

YES

IN RESPONSE TO DETERMINING THAT THE CLOSEST DISTANCE IS LESS THAN THE FIRST DISTANCE THRESHOLD, CONTROLLING THE AT LEAST ONE WHEEL MOTOR TO MOVE THE ROBOTIC GARDEN TOOL FORWARD AT A SECOND SPEED PROPORTIONATE TO THE CLOSEST DISTANCE BETWEEN THE ROBOTIC GARDEN TOOL AND THE CLOSEST OBJECT, WHEREIN THE SECOND SPEED IS LESS THAN THE FIRST SPEED

IN RESPONSE TO DETERMINING THAT THE CLOSEST DISTANCE IS GREATER THAN OR EQUAL TO THE FIRST DISTANCE THRESHOLD, CONTROLLING THE AT LEAST ONE WHEEL MOTOR TO MOVE THE ROBOTIC GARDEN TOOL FORWARD AT THE FIRST SPEED

TO BLOCK 405 OF FIG. 4A

IS THE CLOSEST DISTANCE BETWEEN THE CLOSEST OBJECT AND THE ROBOTIC GARDEN TOOL LESS THAN THE FIRST DISTANCE THRESHOLD AND GREATER THAN OR EQUAL TO A SECOND DISTANCE THRESHOLD?

NO

YES

IN RESPONSE TO DETERMINING THAT THE CLOSEST DISTANCE IS LESS THAN THE SECOND DISTANCE THRESHOLD, CONTROLLING THE AT LEAST ONE WHEEL MOTOR TO MOVE THE ROBOTIC GARDEN TOOL BACKWARD AT A THIRD SPEED PROPORTIONATE TO THE CLOSEST DISTANCE BETWEEN THE ROBOTIC GARDEN TOOL AND THE CLOSEST OBJECT

CONTROLLING THE AT LEAST ONE WHEEL MOTOR TO MOVE THE ROBOTIC GARDEN TOOL FORWARD AT THE SECOND SPEED PROPORTIONATE TO THE CLOSEST DISTANCE BETWEEN THE ROBOTIC GARDEN TOOL AND THE CLOSEST OBJECT, WHEREIN THE SECOND SPEED IS LESS THAN THE FIRST SPEED

TO BLOCK 405 OF FIG. 4A

500

RECEIVING, WITH AN ELECTRONIC PROCESSOR OF THE ROBOTIC GARDEN TOOL, OBJECT DETECTION DATA FROM AN OBJECT DETECTION SENSOR OF THE ROBOTIC GARDEN TOOL, WHEREIN THE OBJECT DETECTION DATA INDICATES A RESPECTIVE POSITION OF EACH OF ONE OR MORE OBJECTS WITH RESPECT TO THE ROBOTIC GARDEN TOOL

505

510

BASED ON THE OBJECT DETECTION DATA, ARE THERE ANY OBJECTS PRESENT WITHIN A DETECTION AREA OF THE OBJECTION DETECTION SENSOR?

YES

520

NO

515

CONTROLLING AT LEAST ONE WHEEL MOTOR TO MOVE THE ROBOTIC GARDEN TOOL IN A FIRST STRAIGHT LINE FORWARD IN RESPONSE TO DETERMINING THAT THE OBJECT DETECTION DATA INDICATES AN ABSENCE OF ANY OBJECTS IN THE DETECTION AREA

IN RESPONSE TO DETERMINING THAT THE OBJECT DETECTION DATA INDICATES THAT AT LEAST ONE OBJECT IS PRESENT WITHIN THE DETECTION AREA, DETERMINING, WITH THE ELECTRONIC PROCESSOR, WHETHER A LEFT PORTON OR A RIGHT PORTION OF THE DETECTION AREA INCLUDES (I) MORE OBJECTS, (II) MORE DATA POINTS REPRESENTATIVE OF OBJECTS, OR BOTH (I) AND (II)

CONTROLLING, WITH THE ELECTRONIC PROCESSOR, THE AT LEAST ONE WHEEL MOTOR TO TURN THE ROBOTIC GARDEN TOOL IN A DIRECTION AWAY FROM A PORTION OF THE DETECTION AREA THAT INCLUDES (I) MORE OBJECTS, (II) MORE DATA POINTS REPRESENTATIVE OF OBJECTS, OR BOTH (I) AND (II)

525

FIG. 5

FIG. 6

EP 4 700 521 A2

FIG. 7A

38

*FIG. 7B*

*FIG. 8*

FIG. 9A

FIG. 9B

FIG. 9C

FIG. 9D

FIG. 10

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63370628
- US 63356813